# EUROPÄISCHE PATENTSCHRIFT

(11) **EP 1 955 756 B1**
(45) Veröffentlichungstag und Bekanntmachung des Hinweises auf die Patenterteilung: **11.04.2012**
(21) Anmeldenummer: 07123926.3
(22) Anmeldetag: 21.12.2007
(51) Int. Cl.: B01D 53/22, B01D 69/10, B01D 71/02, H01M 2/16, B01D 67/00

(54) **Keramische Membrane mit verbesserter Haftung auf plasmabehandeltem polymerem Supportmaterial, sowie deren Herstellung und Verwendung**
Ceramic membrane with improved adhesion to plasma-treated polymeric support material and the manufacture and usage thereof
Membrane céramique dotée d'une adhérence améliorée sur un matériau de support en polymère traité par plasma, sa fabrication et son utilisation

(30) Priorität: 29.01.2007 DE 102007005156
(43) Veröffentlichungstag der Anmeldung: 13.08.2008
(73) Patentinhaber: Evonik Degussa GmbH, 45128 Essen (DE)
(72) Erfinder: Pascaly, Matthias, 48163 Münster (DE); Terwonne, Rolf-Walter, 45772 Marl (DE); Hying, Christian, 46414 Rhede (DE); Hörpel, Gerhard, 48301 Nottuln (DE)

(56) Entgegenhaltungen:
- DE-A- 10 208 277
- DE-A- 10 347 569

## Beschreibung

Die vorliegende Erfindung betrifft keramische, flexible Membrane mit verbesserter Haftung der Keramik auf dem Polymervlies, deren Herstellung und deren Verwendung als Separator oder als Filtrationsmembran in Flüssig-Filtrationsanwendungen. Die keramischen Membrane auf Basis von mit Keramik beschichteten Polymertextilien, weisen auch bei starker mechanischer Beanspruchung keine Ablösungen der keramischen Beschichtung auf.

Ein elektrischer Separator ist eine Membran, die in Batterien und anderen Anordnungen, in denen Elektroden, z.B. unter Aufrechterhaltung von Ionenleitfähigkeit, voneinander separiert werden müssen, eingesetzt wird.

Der Separator ist üblicherweise ein dünner, poröser, elektrisch isolierender Stoff mit hoher Ionendurchlässigkeit, guter mechanischer Festigkeit und Langzeitstabilität gegen die im System, z.B. im Elektrolyten der Batterie, verwendeten Chemikalien und Lösemittel. Er soll in Batterien die Kathode von der Anode elektronisch völlig isolieren aber für den Elektrolyten durchlässig sein. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z.B. die von Batterie-Zellen. Die Entwicklung wiederaufladbarer Batterien wird daher durch die Entwicklung geeigneter Separatormaterialien geprägt.

Allgemeine Informationen über elektrische Separatoren und Batterien können z.B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen bzw. aus anorganischen Vliesstoffen, wie z.B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z.B. aus Polypropylen oder aus einem Polypropylen/Polyethylen/Polypropylen-Verbund.

Die heute häufig verwendeten Lithium-Batterien zeichnen sich im Vergleich zu Systemen mit wässrigen Elektrolyten, wie etwa NiCd-Batterien oder Nickel-Metallhydrid-Batterien, durch viele Vorteile, wie z.B. hohe spezifische Energiedichte, keine Selbstentladung und kein Memoryeffekt aus. Lithium-Batterien besitzen aber den Nachteil, dass sie einen brennbaren Elektrolyten enthalten, und die Batteriekomponenten zudem sehr heftig mit Wasser reagieren können. Für Hochenergiebatterien, d.h. Batterien die viel Aktivmaterial enthalten, ist es deshalb sehr wichtig, dass im Falle eines Unfalls und einer damit einhergehenden Erwärmung der Zelle der Stromkreis in der Batterie unterbrochen wird. Dies erfolgt üblicherweise durch spezielle Separatoren, die aus einem Verbund aus Polypropylen(PP)-Polyethylen(PE)-PP bestehen. Ab einer bestimmten Temperatur, der Abschalttemperatur (shut down Temperatur), schmilzt das PE auf und die Poren des Separators werden verschlossen und der Stromkreis wird unterbrochen.

Nachteilig an diesen Separatoren ist die begrenzte thermische Stabilität, denn bei einer weiteren Erwärmung der Zelle schmilzt auch das Polypropylen, so dass es bei dieser Durchbrenntemperatur (melt down Temperatur) zu einem Aufschmelzen des gesamten Separators und somit zu einem großflächigen inneren Kurzschluss kömmt, der häufig unter Feuerschein oder sogar Explosion zur Zerstörung der Batteriezelle führt. Nun sind zwar keramische Separatoren, wie z.B. Keramikpapiere oder Keramikvliese oder -gewebe bekannt, die den Effekt des Durchbrennens (melt down) nicht zeigen, diese zeigen leider aber auch keinen Abschalt(shut down)-Effekt, der insbesondere für Hochenergieanwendungen aber unverzichtbar ist und von Batterieherstellem gefordert wird.

Keramische oder halbkeramische (hybride) Separatoren oder als Separatoren einsetzbare keramische Membranen sind hinlänglich, z.B. aus WO 99/15262 bekannt. Aus dieser Schrift kann auch die Herstellung von Separatoren oder Membranen, die als Separatoren geeignet sind, entnommen werden. Vorzugsweise werden als poröse Träger für die erfindungsgemäßen Separatoren allerdings keine elektrisch leitfähigen Träger wie z.B. Metallgewebe eingesetzt, da es bei der Verwendung solcher Träger zu inneren Kurzschlüssen kommen kann, wenn die keramische Beschichtung des Trägers nicht vollständig ist. Erfindungsgemäße Separatoren weisen deshalb bevorzugt Träger aus nicht elektrisch leitfähigen Materialien auf.

In neuester Zeit sind hybride Separatoren entwickelt worden, die Keramiken und Polymere aufweisen. In DE 102 08 277 wurden Separatoren basierend auf polymeren Substratmaterialien, wie z.B. Polymervliesen, hergestellt, die eine poröse, elektrisch isolierende, keramische Beschichtung aufweisen. Bei mechanischer Beanspruchung, wie sie z.B. bei der Herstellung von Batterien häufig vorkommt, löst sich bei diesen Separatoren trotz ihrer Flexibilität häufig die keramische Beschichtung teilweise ab. Aus diesen Separatoren hergestellte Batterien zeigen deshalb eine relativ hohe Fehlerquote.

In DE 103 47 569 A1 werden keramische, flexible Membrane mit verbesserter Haftung der Keramik auf dem Trägervlies, deren Herstellung und deren Verwendung als Separator oder als Filtrationsmembran in Flüssig-Filtrationsanwendungen offenbart. Durch die Verwendung von zumindest zwei Haftvermittlern entsteht ein Silizium aufweisendes Netzwerk, wobei das Silizium des Netzwerks über Sauerstoffatome untereinander als auch an die Oxide der keramischen Beschichtung, über wenige reaktive Enden der Polymerketten an das Polymervlies oder über eine, Kohlenstoffatome aufweisende Kette an ein weiteres Silizium gebunden ist. Durch die Ketten zwischen den Siliziumatomen liegt neben einem anorganischen Netzwerk, welches über Si- bzw. Metalloxid-Brücken entsteht, ein zweites mit diesem vernetztes organisches Netzwerk vor. Dieses Netzwerk bildet sich ober- und unterhalb als auch durch das Trägervlies aus. Obwohl eine Membran mit einer insbesondere gegenüber Wasser stabilen keramischen Beschichtung erhalten wird, kann diese Beschichtung gelegentlich Risse oder auch Abrieb aufweisen, hervorgerufen bspw. durch Weiterverarbeitung, die eine dauerhafte Einsetzbarkeit in Hochenergiebatterien einschränken.

DE 102 08 277 A1 offenbart elektrische Separatoren sowie ein Verfahren zu deren Herstellung, die ein flächiges, mit einer Vielzahl von Öffnungen versehenes, flexibles Substrat mit einer auf und in diesem Substrat befindlichen Beschichtung umfassen, wobei das Substrat ein polymeres Vlies ist und die Beschichtung eine poröse, elektrisch isolierende, keramische Beschichtung ist, und wobei der Separator eine Dicke von kleiner 80 µm aufweist. Die Polymer- oder Naturfasern des Substrates weisen eine Porosität von mehr als 50 % auf. Die Beschichtung bildet ein Netzwerk mit einer einstellbaren Porenweite ober- und unterhalb des Substrates aus, welches zwar gegenüber Wasser stabil ist, jedoch wie bei DE 103 47 569 A1 gelegentlich Risse oder auch Abrieb aufweisen kann, die eine dauerhafte Einsetzbarkeit in Hochenergiebatterien einschränken.

Es war deshalb Aufgabe der vorliegenden Erfindung Membranen, die als Separatoren geeignet sind, bereitzustellen, die einen oder mehrere Nachteile des Standes der Technik überwinden.

Überraschenderweise wurde gefunden, dass durch eine Behandlung des Polymervlieses mit Plasma, im Folgenden abgekürzt mit dem Begriff Plasmabehandlung, und die anschließende Verwendung einer Kombination von zumindest zwei unterschiedlichen Haftvermittlern auf Basis von Alkyltrialkoxysilanen, wobei die Alkylgruppe des einen Haftvermittlers einen Substituenten aufweist, der mit einem Substituenten der Alkylgruppe des anderen Haftvermittlers durch Reaktion eine kovalente Bindung bilden kann, bei der Herstellung der keramischen Beschichtung eine Beschichtung erhalten wird, die sich durch eine gegenüber dem Stand der Technik bessere Haftfestigkeit auszeichnet. Überraschenderweise sind die so hergestellten keramischen Beschichtungen nicht allein sehr stabil gegenüber der Einwirkung von Wasser, sondern sind überdies Pinhole-frei und resistent gegenüber Abrieb.

Unter einer Plasmabehandlung wird im Rahmen der vorliegenden Erfindung die Bedüsung des Polymervlieses mit Plasma verstanden. Das Plasma wird auf eine dem Fachmann bekannte Weise durch Entladung einer Hochfrequenz-Wechselspannung in einem Gas, dem sogenannten Arbeitsgas erzeugt. Teile dieses Plasmas werden mittels einer gezielten Gasströmung aus der Entladungsstrecke herausgeblasen und durch Plasmadüsen, die durch einen Stator, in dem ein Rotor mit hoher Drehzahl rotiert, gebildet werden, über Blenden auf die Oberfläche des zu behandelnden Materials geleitet. Ein Hersteller Plasma erzeugender Geräte für die Plasmabehandlung von Oberflächen ist zum Beispiel die Firma Plasmatreat GmbH, Bisamweg 10, D-33803 Steinhagen.
Unter einer Pinhole-freien und abriebresistenten keramischen Beschichtung wird im Rahmen der vorliegenden Erfindung eine keramische Beschichtung verstanden, die in einer rasterelektronenmikroskopischen Abbildung (REM) der Oberfläche dieser Beschichtung mit einem Vergrößerungsfaktor von 10000 höchstens 10 Risse pro cm² Oberfläche auf der Beschichtung, wobei die Anzahl der Risse der Durchschnittswert ist, der aus der Beurteilung von 10 unterschiedlichen Stellen an der Oberfläche erhalten wird, aufweist. Als genau ein Riss wird ein im REM mit bloßem Auge erkennbarer Riss gezählt, der in einer gedachten, durchgehenden Linie von einem Startpunkt, der einen Berührungspunkt mit einem anderen Riss darstellen kann, zu einem Endpunkt verläuft, der ebenfalls einen Berührungspunkt mit einem anderen Riss darstellen kann, wobei zwischen Start- und Endpunkt keine weiteren Berührungspunkte mit anderen Rissen vorhanden sind.
Pinholes können auch durch Benetzungsfehler entstanden sein. Unter Benetzungsfehlern versteht man Bereiche der keramischen Beschichtung, die auf Grund schlechter Verträglichkeit zwischen Schlicker und Polymervlies Krater ausbildet. Krater sind kreisförmige Vertiefungen oder Mulden mit geringfügig hochstehenden Rändern.
Gegenstand der vorliegenden Erfindung ist deshalb eine Membran auf Basis eines Polymervlieses, wobei das Vlies auf und in dem Vlies eine keramische Beschichtung aufweist, die zumindest ein Oxid, ausgewählt aus Al₂O₃, TiO₂, ZrO₂, BaTiO₃ und/oder SiO₂ aufweist, welche dadurch gekennzeichnet ist, dass das Polymervlies einer Plasmabehandlung unterzogen ist, und in dieser einen Beschichtung zumindest zwei Fraktionen von Oxiden ausgewählt aus Al₂O₃, ZrO₂, TiO₂, BaTiO₃ und/oder SiO₂ vorhanden sind, wobei die erste keramische Fraktion aus einem Sol erhalten wurde und die zweite Fraktion Partikel mit einer mittleren Partikelgröße von 200 nm bis 5 µm aufweist, und die erste Fraktion als Schicht auf den Partikeln der zweiten Fraktion vorhanden ist und die erste Fraktion mit einem Anteil an der Beschichtung von 0,1 bis 50 Massenteilen, die zweite Fraktion mit einem Anteil an der Beschichtung von 5 bis 99 Massenteilen in der keramischen Beschichtung vorhanden ist und außerdem ein Silizium oder Zirkonium aufweisendes Netzwerk vorhanden ist, wobei das Silizium des Netzwerks über Sauerstoffatome an die Oxide der keramischen Beschichtung, über organische Reste an die Oberfläche des Polymervlieses und über zumindest eine, Kohlenstoffatome aufweisende Kette an ein weiteres Silizium gebunden ist, und diese Beschichtung Pinhole-frei ist, und bei der Ermittlung der Haftfestigkeit nach DIN 58 196-6, Abschnitt 3 - 6, mittels Gewebeklebestreifen Tesa 6051 keine nennenswerte Menge der keramischen Beschichtung abziehbar ist.

Ebenfalls Gegenstand der vorliegenden Erfindung ist ein Verfahren zur Herstellung einer Membran, insbesondere einer erfindungsgemäßen Membran, bei dem ein Polymervlies in und auf dem Vlies mit einer keramischen Beschichtung versehen wird, wofür auf und in das Polymervlies eine Suspension aufgebracht wird und diese durch zumindest einmaliges Erwärmen auf und im Vlies verfestigt wird, wobei die Suspension ein Sol und zumindest eine Fraktion von Oxidpartikeln ausgewählt aus den Oxiden der Elemente Al, Zr, Ti, Ba und/oder Si aufweist, welches dadurch gekennzeichnet ist, dass das Polymervlies vor dem Aufbringen einer Plasmabehandlung unterzogen wird, und der Suspension vor dem Aufbringen ein Gemisch aus zumindest zwei unterschiedliche Haftvermittler, die jeweils auf einem Alkylalkoxysilan der allgemeinen Formel I

Rₓ-Si(OR)₄₋ₓ (I)

mit x = 1 oder 2 und R = organischer Rest, wobei die Reste R gleich oder unterschiedlich sein können,
basieren, wobei die Haftvermittler so gewählt werden, dass beide Haftvermittler Alkylreste aufweisen, die zumindest jeweils eine reaktive Gruppe als Substituenten aufweist, wobei die reaktive Gruppe am Alkylrest des einen Haftvermittlers mit der reaktiven Gruppe des anderen Haftvermittlers oder der einer Plasmabehandlung unterzogenen Polymeroberfläche während des zumindest einmaligen Erwärmens unter Ausbildung einer kovalenten Bindung reagiert, oder ein oder mehrere Haftvermittler gemäß der Formel I, die reaktive Gruppen aufweisen, die unter Einwirkung von UV-Strahlung unter Ausbildung einer kovalenten Bindung reagieren, zugegeben wird, wobei bei Zugabe eines Haftvermittlers der unter Einwirkung von UV-Strahlung reagiert, nach dem Aufbringen der Suspension auf das Polymervlies zumindest eine Behandlung mit UV-Strahlung erfolgt.

Außerdem ist Gegenstand der vorliegenden Erfindung die Verwendung von erfindungsgemäßen Membranen oder Separatoren als elektrischer Separator sowie die Batterien selbst, die eine solche erfindungsgemäße Membran als Separator aufweisen.

Ein Vorteil der erfindungsgemäßen Membran besteht darin, dass die keramische Beschichtung Pinhole-frei ist. Der Herstellungsprozeß erlaubt also, dass eine solche Membran eine exakt definierte Porengrößenverteilung besitzt. Durch die Vermeidung von Pinholes wird die Durchdringung der Membran mit Elektrolyten und deren Ionenleitfähigkeit nicht beeinträchtigt. Vielmehr ergeben sich nur Vorteile. So werden in Batterien, die den erfindungsgemäßen Separator enthalten, Micro-Kurzschlüsse, gleichbedeutend mit Kurzschlüssen, die zwar den Betrieb der Batterie erlauben, jedoch zu langsamer Selbstentladung führen, eliminiert. Dies führt auch zu einer Verbesserung der Sicherheit der Batterie, da der Schwachpunkt einer dünnen Separatorschicht, die im Stand der Technik zu Kurzschlüssen führt, durch die erfindungsgemäße Membran beseitigt ist. Ebenso hat die erfindungsgemäße Membran den Vorteil, dass in ein- und demselben Batterievolumen mehr Windungen aus Elektroden und Separator bzw. eine höhere Packungsdichte aus Elektroden und Separator untergebracht werden kann und somit Batterien mit einer gegenüber dem Stand der Technik gesteigerten Kapazität ermöglicht sind.

Die erfindungsgemäße Membran hat des weiteren den Vorteil, dass sie eine in Wasser und polaren organischen Lösungsmitteln wesentlich höhere Beständigkeit aufweist als Membrane, die unter Verwendung von nur einem oder mehreren Haftvermittlern und ohne Vorbehandlung des Polymersubstrates hergestellt wurden, bei denen eine gute Benetzung des Polymervlieses nicht gegeben ist und eine Ausbildung von kovalenten Bindungen zwischen den Haftvermittlern und der Oberfläche des Polymervlieses nicht erfolgt ist. Durch die höhere Stabilität der Membran gegenüber mechanischer Beanspruchung als auch Wasser und polaren organischen Lösungsmitteln wird eine wesentlich verbesserte Verarbeitbarkeit beim Batteriebau und eine Verbesserung der Batterieperformance erreicht.

Außerdem hat die erfindungsgemäße Membran den Vorteil, dass die keramische Beschichtung eine gegenüber dem Stand der Technik verbesserte Haftfestigkeit auf dem Polymervlies aufweist, gemessen nach DIN 58 196-6.

Die Herstellung der erfindungsgemäßen Membran unter Verwendung der speziellen Haftvermittler hat auch auf das Verfahren vorteilhafte Auswirkungen. So kann bei dem erfindungsgemäßen Verfahren das Verfestigen der Beschichtung bei relativ niedrigen Temperaturen (Trocknungs- bzw. Verfestigungstemperatur) erfolgen, weshalb es auch möglich ist Membranen mit einer haltbaren keramischen Beschichtung herzustellen, die auf einem Polymersubstrat basieren, die einen Schmelz oder Erweichungspunkt von zumindest 120 bis 150 °C aufweisen, wie z.B. Polyamid, Polypropylen oder Polyethylen.

Wird eine Membran hergestellt, die wie in einer speziellen Ausführungsform beschrieben zumindest zwei Fraktionen von Metalloxiden aufweist, so weisen solche Membranen zudem den Vorteil auf, dass diese nach dem Verfestigen der keramischen Beschichtung auf dem Vlies durch Knicken, Falten oder Zerknüllen nicht mehr zerstört wird. Die Membran kann also praktisch bis herab zu einem Biegeradius von 0 mm gebogen werden. Damit haben die erfindungsgemäßen Membranen eine dramatisch bessere mechanische Stabilität als die aus dem Stand der Technik bekannten keramischen oder hybriden Membrane. Der Umgang mit dieser Membran bei der Herstellung aber auch bei der Verarbeitung, d.h. der Herstellung z.B. von gewickelten oder gestapelten Batterien, wird dadurch entscheidend verbessert. Mit den erfindungsgemäßen Membranen als Separatoren hergestellte Batterien weisen eine sehr geringe Fehlerquote auf.

Die erfindungsgemäßen Membranen weisen als Separatoren ein plasmabehandeltes Polymervlies mit einer auf und in diesem Vlies befindlichen porösen anorganischen, nicht elektrisch leitfähigen Beschichtung auf, und haben den Vorteil, dass sie hervorragende Sicherheitseigenschaften aufweisen. Zum sogenannten Melt-Down (Durchbrennen) kann es bei dem erfindungsgemäßen Separator nicht kommen, da auch bei höheren Temperaturen die anorganische Schicht einen großflächigen Kurzschluss innerhalb der Batterie verhindert. Durch die Pinhole-Freiheit wird eine gegenüber dem Stand der Technik engere Porengrößenverteilung der Membran ermöglicht. Der Ausschluß von Pinholes, gleichbedeutend mit dem Ausschluß unerwünscht großer Poren, verringert außerdem die Wahrscheinlichkeit von Kurzschlüssen sowie Micro-Shorts. So verbessert sich neben einer Reduzierung der Selbstentladerate auch die Sicherheit der Batterien.

Auch bei einem inneren Kurzschluss, der z.B. durch einen Unfall verursacht wurde, ist der erfindungsgemäße Separator sehr sicher. Würde sich z.B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer, und die Reaktion gerät außer Kontrolle. Bei dem erfindungsgemäßen Separator schmilzt das Polymervlies, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polymerseparator. Dies kommt vor allem im mobilen Bereich zum Tragen.

Die Vorteile der erfindungsgemäßen Membran als Separator für den Einsatz in Lithium-Ionen-Batterien sind zusammengefasst:
◆ Hohe Porosität,
◆ Ideale Porenweite,
◆ Geringe Dicke,
◆ Geringes Flächengewicht,
◆ Sehr gutes Benetzungsverhalten,
◆ Hohe Sicherheit, d.h. kein melt-down-Effekt,
◆ Verbesserte Haftfestigkeit nach DIN 58 196-6,
◆ Sehr gute Knick-/Biegbarkeit, weshalb sie besonders gut in sehr eng gewickelten Lithiumbatterien, insbesondere sogenannten gecrashten Zellen, eingesetzt werden können,
◆ Pinhole- und Benetzungsdefekt-Freiheit.

Die erfindungsgemäße Membran und ein Verfahren zu deren Herstellung wird im Folgenden beschrieben, ohne dass die Erfindung auf diese Ausführungsarten beschränkt sein soll.

Die erfindungsgemäße Membran auf Basis eines Polymervlieses, wobei das Vlies auf und in dem Vlies zumindest eine keramische Beschichtung aufweist, die zumindest ein Oxid, ausgewählt aus Al₂O₃, TiO₂, ZrO₂, BaTiO₃ und/oder SiO₂ aufweist, zeichnet sich dadurch aus, dass das Polymervlies einer Plasmabehandlung unterzogen ist, und in dieser einen Beschichtung zumindest zwei Fraktionen von Oxiden ausgewählt aus Al₂O₃, ZrO₂, TiO₂, BaTiO₃ und/oder SiO₂ vorhanden sind, wobei die erste keramische Fraktion aus einem Sol erhalten wurde und die zweite Fraktion Partikel mit einer mittleren Partikelgröße von 200 nm bis 5 µm aufweist, und die erste Fraktion als Schicht auf den Partikeln der zweiten Fraktion vorhanden ist und die erste Fraktion mit einem Anteil an der Beschichtung von 0,1 bis 50 Massenteilen, die zweite Fraktion mit einem Anteil an der Beschichtung von 5 bis 99 Massenteilen in der keramischen Beschichtung vorhanden ist und außerdem ein Silizium oder Zirkonium aufweisendes Netzwerk vorhanden ist, wobei das Silizium des Netzwerks über Sauerstoffatome an die Oxide der keramischen Beschichtung, über organische Reste an die einer Plasmabehandlung unterzogene Oberfläche des Polymervlieses und über zumindest eine, Kohlenstoffatome aufweisende Kette an ein weiteres Silizium gebunden ist, und diese Beschichtung Pinhole-frei ist, und bei der Ermittlung der Haftfestigkeit nach DIN 58 196-6, Abschnitt 3 - 6, mittels Gewebeklebestreifen Tesa 6051 keine nennenswerte Menge der keramischen Beschichtung abziehbar ist.
Das Silane enthaltende Sol geht mit der einer Plasmabehandlung unterzogenen Oberfläche des Polymervlieses kovalente Bindungen ein.
Es kann vorteilhaft sein, wenn die Kohlenstoffatome aufweisende Kette außerdem ein Stickstoffatom aufweist. Weiterhin kann es vorteilhaft sein, wenn die Kohlenstoffatome aufweisende Kette bei Verwendung geeigneter Silan-haltiger Haftvermittler wie z.B. AMEO außerdem ein Stickstoffatom aufweist. Bevorzugt weist die erfindungsgemäße Membran ein Silizium aufweisendes Netzwerk auf, bei dem die Ketten, mit welchen die Siliziumatome untereinander über Kohlenstoffatome verbunden sind, durch Stickstoff aufweisende Ketten verbundenen Siliziumatome durch Addition einer Aminogruppe an eine Glycidyl-Gruppe erhalten wurde. Durch diese Ketten zwischen den Siliziumatomen liegt neben einem anorganischen Netzwerk, welches über Si- bzw. Metall-Sauerstoffbrücken entsteht, ein zweites mit diesem vernetztes organisches Netzwerk vor. Dadurch und durch die kovalente Anbindung der Siliciumatome an die einer Plasmabehandlung unterzogene Oberfläche des Polymervlieses wird die Stabilität der Membran, insbesondere gegenüber Wasser und anderen polaren Lösungsmitteln, signifikant verstärkt. Soll die erfindungsgemäße Membran als Separator eingesetzt werden, so weist die Membran keine Titanverbindungen (TiO₂), sondern insbesondere als Partikel oder Sol nur SiO₂, Al₂O₃, BaTiO₃ und/oder ZrO₂ auf.
Je nach Ausführungsart der erfindungsgemäßen Membran kann diese als erste keramische Fraktion Partikel, insbesondere Partikel mit einer mittleren Partikelgröße von kleiner 20 nm aufweisen. Eine solche keramische Fraktion kann z.B. über ein partikuläres Sol hergestellt worden sein. In einer anderen bevorzugten Ausführungsform der erfindungsgemäßen Membran enthält die keramische Fraktion Partikel oder ein polymerartiges anorganisches Netzwerk, welche über ein polymeres Sol hergestellt wurden. Die keramische Fraktion weist vorzugsweise eine Schichtdicke kleiner 100 nm, bevorzugt kleiner 50 nm auf der Oberfläche der Partikel der zweiten Fraktion auf. Die Zweite Fraktion von Partikeln weist vorzugsweise eine BET-Oberfläche von kleiner 5 m²/g auf.

Bevorzugt weisen die erfindungsgemäßen Membrane Polymervliese auf, die flexibel sind und bevorzugt eine Dicke von weniger als 50 µm sowie ein Flächengewicht von kleiner als 25 g/m² aufweisen. Durch die Flexibilität des Vlieses wird gewährleistet, dass auch die erfindungsgemäße Membran flexibel sein kann.

Durch die hohe Flexibilität der erfindungsgemäßen Membrane ist es nun auch möglich diese als Separatoren in Wickelzellen einzusetzen, die einen kleinen Wickelradius von kleiner 0,5 mm aufweisen.

Die Dicke des Vlieses hat einen großen Einfluss auf die Eigenschaften der Membran, insbesondere auf die Eigenschaften einer als Separator eingesetzten Membran, da zum einen die Flexibilität, aber auch der Flächenwiderstand des mit Elektrolyt getränkten Separators von der Dicke des Vlieses abhängig ist. Bevorzugt weist die erfindungsgemäße Membran deshalb Vliese auf, die eine Dicke von kleiner 30 µm, insbesondere von 10 bis 20 µm aufweisen. Besonders bevorzugt weist die erfindungsgemäße Membran Vliese auf, die ein Flächengewicht von kleiner 20 g/m², insbesondere von 5 bis 15 g/m² aufweisen. Um eine ausreichend hohe Leistungsfähigkeit der Batterien, insbesondere bei Lithiumionenbatterien, erreichen zu können, hat es sich als vorteilhaft erwiesen, wenn der erfindungsgemäße Membran einen Träger aufweist, der vorzugsweise eine Porosität von größer 50 %, bevorzugt von 50 bis 97 %, besonders bevorzugt von 60 bis 90 % und ganz besonders bevorzugt von 70 bis 90% aufweist. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Wichtig für die Verwendung in einer erfindungsgemäßen Membran, insbesondere Separator, kann eine möglichst homogene Porenradienverteilung im Vlies sein. Eine möglichst homogene Porenradienverteilung im Vlies kann in Verbindung mit optimal abgestimmten Oxid-Partikeln bestimmter Größe zu einer optimierten Porosität der erfindungsgemäßen Membran, insbesondere mit Blick auf den Einsatz als Separator führen. Vorzugsweise weist die erfindungsgemäße Membran, insbesondere für als Separator einzusetzende Membrane, deshalb ein Vlies auf, welches eine Porenradienverteilung aufweist, bei der mindestens 50 % der Poren einen Porenradius von 100 bis 500 µm aufweisen.

Als Polymerfasern weist das Vlies vorzugsweise nicht elektrisch leitfähige Fasern von Polymeren auf, die vorzugsweise ausgewählt sind aus Polyacrylnitril (PAN), Polyester, wie z.B. Polyethylenterephthalat (PET), Polyamid (PA), wie z.B. Polyamid 12 oder Polyolefinen, wie z.B. Polypropylen (PP) oder Polyethylen (PE). Besonders bevorzugt weist das Vlies Polymerfasern aus Polyester, insbesondere PET, und/oder Polyamid, insbesondere Polyamid 12, auf bzw. besteht vollständig aus diesen Polymerfasern. Die Polymerfasern der Vliese weisen vorzugsweise einen Durchmesser von 0,1 bis 10 µm, besonders bevorzugt von 1 bis 5 µm auf.

In einer bevorzugten Ausführungsform der erfindungsgemäßen Membran weist diese in der Beschichtung zumindest zwei Fraktionen von Oxiden ausgewählt aus Al₂O₃, ZrO₂, TiO₂, BaTiO₃ und/oder SiO₂ vorhanden sind, wobei die erste Fraktion als Schicht auf den Partikeln der zweiten Fraktion vorhanden ist und die erste Fraktion mit einem Anteil an der Beschichtung von 10 bis 80 Massenteilen und die zweite Fraktion mit einem Anteil an der Beschichtung von 20 bis 90 Massenteilen in der keramischen Beschichtung vorhanden ist.

Bei dieser bevorzugten Ausführungsform dienen die großen Partikel (Zweite Fraktion) als Füllmaterial für die im Träger vorhandenen großen Maschen. Die erste keramische Fraktion dient als anorganisches Bindemittel, welches die Partikel untereinander sowie an dem oberflächenbehandelten Vlies (bzw. an dem durch die Haftvermittler gebildeten anorganischen Silizium aufweisenden Netzwerk) ggf. kovalent fixiert. Das anorganische Netzwerk sowie die Plasmabehandlung des Vlieses stellen eine besonders gute Haftung der keramischen Beschichtung auf dem Polymervlies sicher bei gleichzeitig guter Flexibilität.

Besonders bevorzugt weist die erfindungsgemäße Membran eine Beschichtung auf, bei der die zweite Fraktion Partikel mit einer mittleren Partikelgröße von 0,2 bis 5 µm aufweist und die erste Fraktion mit einem Anteil an der Beschichtung von 10 bis 80 Massenteilen und die zweite Fraktion mit einem Anteil an der Beschichtung von 20 bis 90 Massenteilen in der keramischen Beschichtung vorhanden ist.

Vorzugsweise werden Aluminiumoxid- und/oder SiO₂-Partikel verwendet, die von Siliciumdioxidpartikeln vernetzt werden. Die Partikel (z.B. Sipernat, Aerosil oder VP Zirkoniumoxid, alle Degussa AG sowie die Aluminiumoxide CT800SG, AlCoA, und MZS, Martinswerke) sind kommerziell verfügbar. Die erste keramische SiO₂-haltige Fraktion stammt aus Solen, die ebenfalls kommerziell erhältlich sind oder selbst hergestellt werden müssen.

Die erfindungsgemäßen Membrane lassen sich ohne Beschädigung vorzugsweise bis auf jeden Radius bis herab zu 50 m, vorzugsweise 10 cm und besondere bevorzugt 5 mm biegen, ohne dass dadurch Fehler in der Beschichtung entstehen. Die erfindungsgemäßen Membrane zeichnen sich außerdem dadurch aus, dass sie eine Reißfestigkeit von mindestens 1 N/cm, vorzugsweise von mindestens 3 N/cm und ganz besonders bevorzugt von größer 6 N/cm aufweisen können.

Die erfindungsgemäßen Membrane weisen unter der rasterelektronenmikroskopischen Abbildung (REM) der Oberfläche ihrer keramischen Beschichtung mit einem Vergrößerungsfaktor von 10000 bevorzugt höchstens 5 Risse pro cm² Oberfläche auf der Beschichtung, besonders bevorzugt höchstens 2 Risse pro cm², ganz besonders bevorzugt höchstens 1 Riss pro cm² auf, wobei die Anzahl der Risse der Durchschnittswert ist, der aus der Beurteilung von 10 unterschiedlichen Stellen an der Oberfläche erhalten wird.

Weisen die erfindungsgemäßen Membrane die oben erwähnten Fraktionen in den angegebenen Massenbereichen auf, so können sie eine noch größere Flexibilität aufweisen. Diese erfindungsgemäßen Membrane lassen sich ohne Beschädigung vorzugsweise bis auf jeden Radius bis herab zu 100 m, bevorzugt auf einen Radius von 100 m bis 5 mm, besonders bevorzugt auf einen Radius von 5 bis 0,5 mm, vorzugsweise bis herab zu 0,1 mm und ganz besonders bevorzugt bis herab zu 0,01 mm biegen, ohne dass dadurch Fehler entstehen. Insbesondere lassen sich die erfindungsgemäßen Membrane falten, wie dies z.B. mit Tüchern möglich ist, ohne dass die keramische Beschichtung sich löst. Die hohe Reißfestigkeit und die gute Biegbarkeit der erfindungsgemäßen Membran hat den Vorteil, dass beim Einsatz der Membran als Separator beim Laden und Entladen der Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Zur Verwendung als Separator kann es vorteilhaft sein, wenn die erfindungsgemäße Membrane eine Porosität von 30 bis 80 % aufweist. Die Porosität bezieht sich dabei auf die erreichbaren, also offenen Poren. Die Porosität kann dabei mittels der bekannten Methode der Quecksilber-Porosimetrie bestimmt werden oder kann aus dem Volumen und der Dichte der verwendeten Einsatzstoffe errechnet werden, wenn davon ausgegangen wird, dass nur offene Poren vorliegen. Unter der mittleren Porengröße und der Porosität ist die mittlere Porengröße und die Porosität zu verstehen, die nach der bekannten Methode der Quecksilber-Porosimetrie z.B. mit einem Porosimeter 4000 von Carlo Erba Instruments bestimmt werden kann. Der Quecksilber-Porosimetrie liegt die Washburn-Gleichung zu Grunde (E. W. Washburn, "Note on a Method of Determining the Distribution of Pore Sizes in a Porous Material", Proc. Natl. Acad. Sci., 7, 115-16 (1921)).

Bei der Verwendung der Membran als Separator kann es zudem vorteilhaft sein, wenn eine Abschaltfunktion vorhanden ist. Zu diesem Zweck können auf der keramischen Schicht Abschaltpartikel bzw. eine Schicht aus Abschaltpartikeln vorhanden sein. Solche Abschaltpartikel können beispielweise natürliche oder künstliche Wachse, (niedrigschmelzende) Polymere, wie z.B. Polyolefine oder Mischungen davon sein, wobei das Material der Abschaltpartikel so ausgewählt wird, das die Partikel bei einer gewünschten Abschalttemperatur aufschmelzen und die Poren des Separators (der Membran) verschließen, so dass ein weiterer lonenfluss verhindert wird. Besonders bevorzugt weist die erfindungsgemäße Membran für den Einsatz als Separator mit Abschaltfunktion Abschaltpartikel aus Polyethylen (-wachs) auf.

Die Größe der Abschaltpartikel ist prinzipiell beliebig, solange sichergestellt ist, dass die Poren der anorganischen Schicht bei der Herstellung des erfindungsgemäßen Separators (der Membran) nicht verstopft werden. Vorzugsweise weisen die Abschaltpartikel eine mittlere Partikelgröße (D_{w}) auf, die größer als die mittlere Porengröße (dₛ) der Poren der anorganischen Schicht ist. Bevorzugt weisen die Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt. Dies ist insbesondere deshalb vorteilhaft, weil so ein Eindringen und Verschließen der Poren der anorganischen Schicht, das eine Reduktion des Ionenflusses und damit der Leitfähigkeit des Separators und auch der Leistungsfähigkeit der Batterie zur Folge hätte, verhindert wird. Die Dicke der Abschaltpartikelschicht ist nur in sofern kritisch, als das eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von kleiner 2 D_{w} bis größer 1 D_{w} beträgt.

Die erfindungsgemäßen Membranen/Separatoren mit Abschaltfunktion weisen vorzugsweise eine Dicke von kleiner 50 µm, bevorzugt kleiner 40 µm, besonders bevorzugt eine Dicke von 5 bis 35 µm auf. Ohne Abschaltpartikel weist der erfindungsgemäße Separator vorzugsweise eine Dicke von 15 bis 50 µm, vorzugsweise von 20 bis 30 µm auf. Die Dicke des Separators hat einen großen Einfluss auf die Eigenschaften des Separators, da zum einen die Flexibilität aber auch der Flächenwiderstand des mit Elektrolyt getränkten Separators von der Dicke des Separators abhängig ist. Durch die geringe Dicke wird ein besonders geringer elektrischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann.

Die erfindungsgemäßen Separatoren sind vorzugsweise erhältlich durch das erfindungsgemäße Verfahren. Das Verfahren zur Herstellung einer Membran, insbesondere einer erfindungsgemäßen Membran, bei dem ein Polymervlies in und auf dem Vlies mit einer keramischen Beschichtung versehen wird, wofür auf und in das Polymervlies eine Suspension aufgebracht wird und diese durch zumindest einmaliges Erwärmen auf und im Vlies verfestigt wird, wobei die Suspension ein Sol und zumindest eine Fraktion von Oxidpartikeln ausgewählt aus den Oxiden der Elemente Al, Zr, Ti, Ba und/oder Si aufweist, zeichnet sich dadurch aus, dass das Polymervlies vor dem Aufbringen der Suspension einer Plasmabehandlung unterzogen wird, und der Suspension vor dem Aufbringen ein Gemisch aus zumindest zwei unterschiedlichen Haftvermittlern, die jeweils auf einem Alkylalkoxysilan der allgemeinen Formel I

Rₓ-Si(OR)₄₋ₓ (I)

mit x = 1 oder 2 und R = organischer Rest, wobei die Reste R gleich oder unterschiedlich sein können,
basieren, wobei die Haftvermittler so gewählt werden, dass beide Haftvermittler Alkylreste aufweisen, die zumindest jeweils eine reaktive Gruppe als Substituenten aufweist, wobei die reaktive Gruppe am Alkylrest des Haftvermittlers mit der reaktiven Gruppe eines weiteren Haftvermittlers oder der einer Plasmabehandlung unterzogenen Polymeroberfläche während des zumindest einmaligen Erwärmens unter Ausbildung einer kovalenten Bindung reagiert, oder ein oder mehrere Haftvermittler gemäß der Formel I, die reaktive Gruppen aufweisen, die unter Einwirkung von UV-Strahlung unter Ausbildung einer kovalenten Bindung reagieren, zugegeben wird, wobei bei Zugabe eines Haftvermittlers der unter Einwirkung von UV-Strahlung reagiert, nach dem Aufbringen der Suspension auf das Polymervlies zumindest eine Behandlung mit UV-Strahlung erfolgt.

Die Behandlung mit UV-Strahlung kann z.B. durch eine UV-Lampe erfolgen, wobei die eingestrahlte Energiemenge so groß gewählt sein muss, dass eine Vernetzung der Haftvermittler stattfindet. Eine entsprechende Behandlung kann z.B. durch Bestrahlung mit einer Quecksilberdampflampe mit einer Wellenlänge von 254 nm für 0,1 bis 24 Stunden, bevorzugt 1 bis 4 Stunden erfolgen. Die Behandlung mit UV-Strahlung kann vor oder nach dem zumindest einmaligen Erwärmen erfolgen. Vorzugsweise erfolgt die UV-Behandlung nach dem Aufbringen der Suspension auf das Polymervlies und vor dem einmaligen Erwärmen der Suspension zur Verfestigung derselben. Besonders bevorzugt erfolgt die Behandlung mit UV-Strahlung nach einem ersten Erwärmen der auf das Polymervlies aufgebrachten Suspension, welches der Antrocknung (Vortrocknung) der Suspension dient und vor einem zweiten Erwärmen, mit welchem die Suspension verfestigt wird. Das Vortrocknen kann z.B. bei einer Temperatur von 50 bis 90 °C, vorzugsweise von 60 bis 85 °C, vorzugsweise für eine Dauer von 0,1 bis 3 Stunden, bevorzugt für eine Dauer von 0,5 bis 1,5 Stunden, erfolgen.

Bei der erfindungsgemäßen Plasmabehandlung des Polymervlieses kann als Arbeitsgas vorzugsweise Stickstoff, Sauerstoff, Luft, Argon, Helium, Kohlenstoffdioxid, Kohlenstoffmonoxid, Ozon, Silane, Alkane, Fluoroalkane, Fluoralkene, besonders bevorzugt Stickstoff, Sauerstoff, Luft, Argon, oder ein Gemisch dieser Arbeitsgase eingesetzt werden. Ganz besonders bevorzugt kann Sauerstoff, Argon, Luft oder ein Sauerstoff/Argon-Gemisch eingesetzt werden.

Es kann vorteilhaft sein, wenn in dem erfindungsgemäßen Verfahren für die Plasmabehandlung ein Radiofrequenzplasma, Zyklotronresonanzfrequenzplasma oder Mikrowellenplasma, besonders bevorzugt ein Radiofrequenzplasma eingesetzt wird.

Vorzugsweise kann in dem erfindungsgemäßen Verfahren für die Plasmabehandlung eine Plasmaleistung von 10 bis 1000 W, besonders bevorzugt von 100 bis 750 W, ganz besonders bevorzugt von 300 bis 500 W eingesetzt werden.

Weiterhin kann in dem erfindungsgemäßen Verfahren für die Plasmabehandlung ein Abstand zwischen Düse und Polymervlies vorzugsweise von 0,1 bis 300 mm, besonders bevorzugt von 1 bis 80 mm, weiterhin besonders bevorzugt von 2 bis 50 mm, ganz besonders bevorzugt von 5 bis 20 mm eingesetzt werden.

Vorzugsweise erfolgt die Plasmabehandlung in dem erfindungsgemäßen Verfahren bei einer Substratgeschwindigkeit von 60 - 0,002 m/min. Unter der Substratgeschwindigkeit wird im Rahmen des erfindungsgemäßen Verfahrens die Geschwindigkeit verstanden, mit dem die Oberfläche des zu behandelnden Polymervlieses durch das von dem Plasma eingenommenen Volumen geführt wird. Besonders bevorzugt kann diese Geschwindigkeit von 40 bis 0,02 m/min, weiterhin besonders bevorzugt von 30 bis 0,2 m/min, ganz besonders bevorzugt von 20 bis 0,1 m/min gewählt werden.

In dem erfindungsgemäßen Verfahren wird vor dem Aufbringen der Suspension dieser Suspension zumindest ein Haftvermittler zugegeben, der auf einem Alkylalkoxysilan der allgemeinen Formel **I**

Rₓ-Si(OR)₄₋ₓ (I)

mit x = 1 oder 2 und R = organischer Rest, wobei die Reste R gleich oder unterschiedlich sein können, basiert, wobei die Haftvermittler so gewählt werden, dass die Haftvermittler Alkylreste aufweisen, die zumindest jeweils eine reaktive Gruppe als Substituenten aufweist, wobei die reaktive Gruppe am Alkylrest des einen Haftvermittlers mit der reaktiven Gruppe des anderen Haftvermittlers oder der plasmabehandelten funktionalisierten Polymeroberfläche während des zumindest einmaligen Erwärmens unter Ausbildung einer kovalenten Bindung reagiert, oder ein oder mehrere Haftvermittler gemäß der Formel **I**, die reaktive Gruppen aufweisen, die unter Einwirkung von UV-Strahlung unter Ausbildung einer kovalenten Bindung reagieren, wobei bei Zugabe eines Haftvermittlers der unter Einwirkung von UV-Strahlung reagiert, nach dem Aufbringen der Suspension auf das Polymervlies zumindest eine Behandlung mit UV-Strahlung erfolgt.

Durch die Verwendung von zumindest zwei der besagten Haftvermittler entsteht vermutlich während der Herstellung der Membran ein Silizium aufweisendes Netzwerk, wobei das Silizium des Netzwerks über Sauerstoffatome an die Oxide der keramischen Beschichtung, über organische Reste sowie Sauerstoffatome an das Polymervlies und über zumindest eine, Kohlenstoffatome aufweisende Kette an ein weiteres Silizium gebunden ist. Vermutlich der gleiche Effekt wird durch eine zumindest einmalige Behandlung mit UV-Strahlung erzielt, wenn ein UV-aktiver Haftvermittler des Suspension zugegeben wird. Durch die Ketten zwischen den Siliziumatomen liegt neben einem anorganischen Netzwerk, welches über Si- bzw. Metall-Sauerstoffbrücken entsteht, ein zweites mit diesem vernetztes organisches Netzwerk vor, durch das die Stabilität der Membran, insbesondere gegenüber Wasser, signifikant verstärkt wird.

Als Haftvermittler sind prinzipiell alle Haftvermittler einsetzbar, die der oben genannten Formel **I** genügen und bei denen zumindest zwei Haftvermittler jeweils einen Alkylrest aufweisen, der in der Lage ist in einer chemischen Reaktion mit dem Alkylrest des anderen Haftvermittlers eine kovalente Bindung aufzubauen. Grundsätzlich kommen alle chemischen Reaktionen in Frage, vorzugsweise ist die chemische Reaktion aber eine Additions- oder Kondensationsreaktion. Die Haftvermittler können dabei jeweils zwei oder einen Alkylrest aufweisen (x in Formel **I** gleich 1 oder 2), jedoch mindestens eine OR-Gruppe (x gleich 1, 2, oder 3). Bevorzugt weisen die im erfindungsgemäßen Verfahren eingesetzten Haftvermittler mit einer reaktiven Gruppe am Alkylrest nur einen Alkylrest auf (x = 1). Im erfindungsgemäßen Verfahren können als zumindest zwei Haftvermittler z.B. ein eine Aminogruppe am Alkylrest und ein eine Glycidyl-Gruppe am Alkylrest aufweisende Haftvermittler eingesetzten werden. Besonders bevorzugt werden im erfindungsgemäßen Verfahren als Haftvermittler 3-Aminopropyltriethoxysilan (AMEO) und 3-Glycidyloxytrimethoxysilan (GLYMO) eingesetzt. Vorzugsweise beträgt das molare Verhältnis der beiden Haftvermittler zueinander von 100 zu 1 bis 1 zu 100, bevorzugt von 2 zu 1 bis 1 zu 2 und ganz besonders bevorzugt ca. 1 zu 1. Als UV-aktiver Haftvermittler, der unter Einwirkung von UV-Strahlung eine kovalente Bindung zwischen den Haftvermittlermolekülen ausbildet, wird vorzugsweise Methacryloxypropyltrimethoxysilan (MEMO) eingesetzt. Die Haftvermittler sind z.B. bei der Degussa AG zu beziehen.

Um ein ausreichend stabiles Netzwerk zu erhalten, weist die erfindungsgemäße Suspension vorzugsweise einen Anteil von 0,1 bis 50 Massen-%, bevorzugt von 2 bis 35 Massen-% an Haftvermittlern auf. Neben den genannten "reaktiven" Haftvermittlern kann die Suspension noch weitere Haftvermittler, ausgewählt aus den organofunktionellen Silanen, aufweisen. Diese Haftvermittler können in der Suspension ebenfalls mit einem Anteil von 0,1 bis 30 Massen-%, bevorzugt von 2 bis 20 Massen-% vorliegen.

Die Suspension kann im erfindungsgemäßen Verfahren z.B. durch Aufdrucken, Aufpressen, Einpressen, Aufrollen, Aufrakeln, Aufstreichen, Tauchen, Spritzen oder Aufgießen auf und in das Vlies gebracht werden.

Das eingesetzte Vlies weist vorzugsweise eine Dicke von kleiner 30 µm, bevorzugt kleiner 20 µm und besonders bevorzugt eine Dicke von 10 bis 20 µm auf. Besonders bevorzugt werden solche Vliese eingesetzt, wie sie bei der Beschreibung der erfindungsgemäßen Membran beschrieben wurden. Es kann vorteilhaft sein, wenn die Polymerfasern einen Durchmesser von 0,1 bis 10 µm, vorzugsweise von 1 bis 5 µm aufweisen. Besonders bevorzugt wird ein Polymervlies eingesetzt, das Fasern ausgewählt aus Polyacrylnitril, Polyester, Polyimid, Polyamid, Polytetrafluorethylen und/oder Polyolefin, wie z.B. Polyethylen oder Polypropylen, aufweist. Insbesondere wird ein Polymervlies eingesetzt, das Fasern ausgewählt aus Polyester, insbesondere Polyethylenterephthalat, und/oder Polyamid, insbesondere Polyamid 12, aufweist.

Die zur Herstellung der Beschichtung verwendete Suspension weist zumindest die oben genannte Fraktion zumindest eines Oxids des Aluminiums, Siliziums, Titans und/oder Zirkoniums und zumindest ein Sol, der Elemente Al, Zr, Ti und/oder Si auf, und wird durch Suspendieren zumindest der Partikel der zweiten Fraktion in zumindest einem dieser Sole hergestellt. Die Suspension kann partikuläre oder polymere Sole aufweisen. Vorzugsweise weist die Suspension ein polymeres Sol, insbesondere ein polymeres Sol einer Siliziumverbindung auf.

Die Sole werden durch Hydrolysieren zumindest einer Vorläuferverbindung der Elemente Zr, Al, Ti und/oder Si mit Wasser oder einer Säure oder einer Kombination dieser Verbindungen erhalten. Ebenso kann es vorteilhaft sein, die zu hydrolysierende Verbindung vor der Hydrolyse in Alkohol oder eine Säure oder eine Kombination dieser Flüssigkeiten zu geben. Vorzugsweise liegen die zu hydrolysierenden Verbindungen gelöst in einem wasserfreien Lösemittel, bevorzugt Alkohol, vor und werden mit dem 0,1 bis 100-fachen, bevorzugt 1 bis 5-fachen Molverhältnis an Wasser hydrolysiert.

Als zu hydrolysierende Verbindung wird vorzugsweise zumindest ein Nitrat, ein Halogenid (Chlorid), ein Carbonat oder eine Alkoholatverbindung der Elemente Zr, Al und/oder Si, vorzugsweise Si hydrolysiert. Besonders bevorzugt als zu hydrolysierende Verbindungen sind Alkoxysilane, insbesondere Tetraethoxysilan (TEOS). Die Hydrolyse erfolgt vorzugsweise in Gegenwart von Wasser, Wasserdampf, Eis, oder einer Säure oder eine Kombination dieser Verbindungen.

In einer Ausführungsvariante des erfindungsgemäßen Verfahrens werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolysierte Verbindung kann zum Peptisieren mit zumindest einer organischen oder anorganischen Säure, vorzugsweise mit einer 10 bis 60 %-igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden.

In einer weiteren Ausführungsvariante des erfindungsgemäßen Verfahrens werden durch Hydrolyse der zu hydrolysierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen, wird die Hydrolyse vorzugsweise so durchgeführt, dass die zu hydrolysierende Verbindung mit dem 0,5 bis 10-fachen Molverhältnis und bevorzugt mit dem halben Molverhältnis Wasser, Wasserdampf oder Eis, bezogen auf die hydrolysierbare Gruppe, der hydrolisierbaren Verbindung, hydrolisiert wird. Eine bis zu 10-fache Menge an Wasser kann bei sehr langsam hydrolysierenden Verbindungen, wie z.B. beim Tetraethoxysilan, eingesetzt werden. Eine Hydrolyse mit weniger als der bevorzugten Menge an Wasser, Wasserdampf oder Eis führt ebenfalls zu guten Ergebnissen. Wobei ein Unterschreiten der bevorzugten Menge von einem halben Molverhältnis um mehr als 50% möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol ist es vorteilhaft, wenn die zu hydrolysierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension oder auch als Haftvermittler in einem Vorbehandlungsschritt eingesetzt werden.

Sowohl die partikulären Sole als auch die polymeren Sole können als Sol in dem Verfahren zur Herstellung der Suspension eingesetzt werden. Neben den Solen, die wie gerade beschrieben erhältlich sind, können prinzipiell auch handelsübliche Sole, wie z.B. Silicasole (wie etwa Levasil, Bayer AG), eingesetzt werden. Das Verfahren der Herstellung von bevorzugt im erfindungsgemäßen Verfahren einsetzbaren Membranen durch Aufbringen und Verfestigen einer Suspension auf einen Träger an und für sich ist aus DE 10142622 und in ähnlicher Form aus WO 99/15262 bekannt, jedoch lassen sich nicht alle Parameter bzw. Einsatzstoffe, auf die Herstellung der im erfindungsgemäßen Verfahren hergestellten Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu führen können, dass Membrane bzw. Separatoren erhalten werden, die Fehler (wie z.B. Löcher oder Risse) aufweisen und damit unbrauchbar sind. Eine Verbesserung ist in der DE 10347569 offengelegt, die die Verwendung von Haftvermittlern zur Verbesserung der Haftung der Sole auf dem Polymersubstrat beansprucht.

Es wurde gefunden, dass ein Solsystem bzw. eine Suspension, welches bzw. welche im Benetzungsverhalten den Polymeren angepasst wurde, die Trägermaterialien, insbesondere die Vliesmaterialien vollständig durchtränkt und somit fehlerfreie Beschichtungen erhältlich sind. Bevorzugt erfolgt bei dem Verfahren deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z.B. Methanol, Ethanol oder Propanol oder Mischungen, die einen oder mehrere Alkohole aufweisen, umfassen. Es sind aber auch andere Lösemittelgemische denkbar, die dem Sol bzw. der Suspension zugegeben werden können, um diese im Benetzungsverhalten an das verwendete Vlies anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem und in einem polymeren Vliesmaterial führt. Solche guten Haftfestigkeiten sind mit partikulären Solsystemen normalerweise nicht erhältlich. Vorzugsweise werden deshalb die erfindungsgemäße eingesetzten Vliese, die Polymerfasern aufweisen, mittels Suspensionen beschichtet, die auf polymeren Solen basieren.

Besonders bevorzugt werden Suspensionen eingesetzt, bei denen der Massenanteil der suspendierten Komponente das 0,1 bis 150-fache, besonders bevorzugt das 0,5 bis 20-fache der eingesetzten Fraktion aus dem Sol beträgt. Als suspendierte Komponente können insbesondere Aluminiumoxid-Partikel eingesetzt werden, die beispielweise von der Firma Martinswerke unter den Bezeichnungen *MZS 3 und MZS1* und von der Firma AlCoA unter der Bezeichnung CT3000 SG, CL3000 SG, CT1200 SG, CT800SG und HVA SG angeboten werden.

In einer bevorzugten Ausführungsvariante des erfindungsgemäßen Verfahren wird eine Suspension eingesetzt, die ein Sol und zumindest zwei Fraktionen von Oxidpartikeln ausgewählt aus den Oxiden der Elemente Al, Zr, Ti und/oder Si aufweist und zumindest eine erste Fraktion Primärpartikel mit einer mittleren Partikelgröße von 0,2 bis 5 µm und einem Anteil an der Suspension von 10 bis 50 Massenteilen und zumindest eine zweite Fraktion eine mittlere Primärpartikelgröße von 10 nm bis 199 nm und einem Anteil an der Suspension von 5 bis 50 Massenteilen aufweist. Die Partikel der ersten Fraktion sind vorzugsweise Aluminiumoxid-Partikel und werden beispielsweise von der Firma Martinswerke unter den Bezeichnungen *MZS 3 und MZS1* und von der Firma AlCoA unter der Bezeichnung CT3000 SG, CL3000 SG, CT1200 SG, CT800SG und HVA SG angeboten. Aluminiumoxid-, Siliziumoxid- oder Zirkoniumoxid-Partikel der zweiten Fraktion werden beispielweise von der Degussa AG unter den Bezeichnungen Sipernat, Aerosil, Aerosil P25 oder Zirkoniumoxid VP angeboten.

Es hat sich herausgestellt, dass der Einsatz von handelsüblichen Oxidpartikeln unter Umständen zu unbefriedigenden Ergebnissen führt, da häufig eine sehr breite Korngrößenverteilung vorliegt. Es werden deshalb bevorzugt Metalloxidpartikel eingesetzt, die durch ein herkömmliches Verfahren, wie z.B. Windsichten und Hydroklassieren klassiert wurden.

Zur Verbesserung der Haftung der anorganischen Komponenten an Polymerfasern bzw. - vliesen, aber auch zur Verbesserung der Haftung der später aufzubringenden Abschaltpartikel, kann es vorteilhaft sein, den eingesetzten Suspensionen weitere Haftvermittler, wie z.B. organofunktionelle Silane, wie z.B. die Degussa-Silane AMEO (3-Aminopropyltriethoxysilan), GLYMO (3-Glycidyloxytrimethoxysilan), MEMO (3-methacryloxypropyltrimethoxysilan), Silfin (Vinylsilan + Initiator + Katalysator), VTEO (Vinyltriethoxysilan), beizufügen. Das Beifügen von Haftvermittlern ist dabei bei Suspensionen auf Basis polymerer Sole bevorzugt. Als Haftvermittler sind allgemein gesprochen insbesondere Verbindungen, ausgewählt aus den Octylsilanen, den Vinylsilanen, den aminfunktionalisierten Silanen und/oder den Glycidylfunktionalisierten Silanen einsetzbar. Besonders bevorzugte Haftvermittler für Polyamide sind Aminfunktionelle Silane und für Polyester Glycidyl-funktionalisierte Silane. Auch andere Haftvermittler sind einsetzbar, die aber auf die jeweiligen Polymere abgestimmt sein müssen. Die Haftvermittler müssen dabei so ausgewählt werden, dass die Verfestigungstemperatur unterhalb des Schmelz- oder Erweichungspunktes des als Substrat eingesetzten Polymeren und unterhalb dessen Zersetzungstemperatur liegt. Bevorzugt weisen erfindungsgemäße Suspensionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die durch das Aufbringen auf und im Polymervlies vorhandene Suspension kann z.B. durch Erwärmen auf 50 bis 350 °C verfestigt werden. Da bei der Verwendung polymerer Materialien die maximal zulässige Temperatur durch die Erweichungs-/Schmelztemperatur dieses Materials vorgegeben wird, ist diese entsprechend anzupassen. So wird je nach Ausführungsvariante des Verfahrens die auf und im Vlies vorhandene Suspension durch Erwärmen auf 100 bis 350 °C und ganz besonders bevorzugt durch Erwärmen auf 200 bis 280 °C verfestigt. Es kann vorteilhaft sein, wenn das Erwärmen für 1 Sekunde bis 60 Minuten bei einer Temperatur von 150 bis 350 °C erfolgt. Besonders bevorzugt erfolgt das Erwärmen der Suspension zum Verfestigen auf eine Temperatur von 110 bis 300 °C, ganz besonders bevorzugt bei einer Temperatur von 170 bis 220 °C und vorzugsweise für 0,5 bis 10 min. Das Verfestigen durch Erwärmen der Suspension auf einem Polymervlies mit Fasern aus Polyester, insbesondere PET, erfolgt vorzugsweise für 0,5 bis 10 Minuten bei einer Temperatur von 200 bis 220 °C, auf einem Polymervlies mit Fasern aus Polyamid, insbesondere Polyamid 12 für 0,5 bis 10 Minuten bei einer Temperatur von 130 bis 180 °C und auf einem Polymervlies mit Fasern aus Polyethylen für 0,5 bis 10 Minuten bei einer Temperatur von 100 bis 140 °C erfolgt. Das Erwärmen des Verbundes kann mittels erwärmter Luft, Heißluft, Infrarotstrahlung oder durch andere Erwärmungsmethoden nach dem Stand der Technik erfolgen.

Das Verfahren zur Herstellung der erfindungsgemäßen Membranen kann z.B. so durchgeführt werden, dass das Vlies von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und in das Vlies bringt, wie z.B. eine Walze, eine Spritze oder eine Rakel, und zumindest eine weitere Apparatur, welche das Verfestigen der Suspension auf und in dem Vlies durch Erwärmen ermöglicht, wie z.B. ein elektrisch beheizter Ofen durchläuft und die so hergestellte Membran auf einer zweiten Rolle aufgerollt wird. Auf diese Weise ist es möglich, die Membran im Durchlaufverfahren herzustellen.

Soll die erfindungsgemäße Membran als Separator eingesetzt werden und soll dieser eine Abschaltfunktion aufweisen, so können auf die poröse keramische Schicht Partikel als Abschaltpartikel aufgebracht und fixiert werden, die eine definierte, gewünschte Schmelztemperatur aufweisen.

In einer Ausführungsvariante des erfindungsgemäßen Verfahrens hat es sich als vorteilhaft erwiesen, die poröse anorganische Schicht vor dem Aufbringen der Abschaltpartikel zu hydrophobieren. Die Herstellung hydrophober Membrane, die als Ausgangsmaterial für die Herstellung der erfindungsgemäßen Separatoren dienen können, wird beispielsweise in WO 99/62624 beschrieben. Vorzugsweise wird die poröse anorganische Schicht durch Behandlung mit Alkyl-, Aryl- oder Fluoralkylsilanen, wie sie z.B. unter dem Namen Markennamen Dynasilan von der Degussa vertrieben werden, hydrophobiert. Es können dabei z.B. die bekannten Methoden der Hydrophobierung, die unter anderem für Textilien angewendet werden (*D. Knittel; E. Schollmeyer; Melliand Textilber. (1998) 79(5), 362-363*), unter geringfügiger Änderung der Rezepturen, auch für poröse stoffdurchlässige Verbundwerkstoffe, welche z.B. nach dem in PCT/EP98/05939 beschriebenen Verfahren hergestellt wurden, angewendet werden. Zu diesem Zweck wird ein stoffdurchlässiger Verbundwerkstoff (Membran oder Separator) mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.-% eines hydrophoben Stoffes gegeben werden. Als hydrophobe Stoffe können z.B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die poröse anorganische Schicht aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahrens kann die poröse anorganische Schicht vor dem Aufbringen der Abschaltpartikel auch mit anderen Haftvermittlern behandelt werden. Die Behandlung mit einem der genannten Haftvermittler kann dann ebenfalls wie oben beschrieben erfolgen, d.h. dass die poröse anorganische Schicht mit einem polymeren Sol, welches ein Silan als Haftvermittler aufweist, behandelt wird. Insbesondere kann die Behandlung in der Weise erfolgen, dass bei der Herstellung des Separators wie oben beschrieben Haftvermittler eingesetzt werden.

Zur Einstellung von Eigenschaften wie bspw. der Hydrophobie kann die Separatoroberfläche am Ende des Verfahrens nachbehandelt werden. Dies kann wie oben beschrieben durch eine Nachbehandlung mit einem Sol erfolgen, aber auch durch eine Plasmabehandlung.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z.B. Alkohol, Kohlenwasserstoffe, Ether oder Ketone oder einem Lösemittelgemisch, hergestellt. Die Partikelgröße der in der Suspension vorliegenden Abschaltpartikel ist prinzipiell beliebig. Es ist jedoch vorteilhaft, wenn in der Suspension Abschaltpartikel mit einer mittleren Partikelgröße (D_{w}) größer der mittleren Porengröße der Poren der porösen anorganischen Schicht (dₛ) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt.

Bevorzugt wird als Lösemittel für die Dispersion Wasser verwendet. Diese wässrige Dispersionen werden auf einen Polymer- bzw. Wachsgehalt von 1 bis 60, bevorzugt von 5 bis 50 und ganz besonders bevorzugt von 20 bis 40 Gew.-% eingestellt. Bei der Verwendung von Wasser als Lösemittel lassen sich sehr einfach bevorzugte mittlere Partikelgrößen von 1 bis 10 µm in der Dispersion erhalten, wie sie für die erfindungsgemäßen Separatoren sehr gut geeignet sind.

Wird ein nicht-wässriges Lösemittel zur Herstellung der Wachs- oder Polymerdispersion verwendet, so lassen sich bevorzugt mittlere Partikelgrößen in der Dispersion von kleiner 1 µm erhalten. Auch Mischungen von nicht-wässrigen Lösemitteln mit Wasser können eingesetzt werden.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Schicht eindringen. Gründe für den Einsatz solcher Partikel können z.B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Schicht erfolgt. Eine solch hohe Viskosität der Suspension kann z.B. dadurch erreicht werden, dass der Suspension Hilfsstoffe, die das Fließverhalten beeinflussen, wie z.B. Kieselsäuren (Aerosil, Degussa) hinzugefügt werden. Beim Einsatz von Hilfsstoffen wie z.B. Aerosil 200 ist häufig ein Anteil von 0,1 bis 10 Gew.-%, vorzugsweise 0,5 bis 50 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf eine Membran / einen Separator aufgebracht werden, auch wenn dieser nicht vor dem Aufbringen hydrophobiert wurde. Natürlich kann eine Haftvermittler aufweisende Suspension auch auf eine hydrophobierte Membran oder auf eine Membran, bei dessen Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Silane sind z.B. von der Degussa als reine Produkte oder als wässrige Lösungen des hydrolisierten Silans unter z.B. der Bezeichnung Dynasilan 2926, 2907 oder 2781 erhältlich. Ein Anteil von maximal 10 Gew.-% an Haftvermittler in der Suspension hat sich als ausreichend für die Sicherstellung einer genügend großen Haftung der Abschaltpartikel an der porösen anorganischen Beschichtung herausgestellt. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Schicht erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird. Die Trocknung muss so durchgeführt werden, dass die Abschaltpartikel nicht schmelzen.
Es kann vorteilhaft sein, wenn die Partikel nach dem Aufbringen auf die poröse keramische Beschichtung durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen, anorganischen Schicht haften.

Das Aufbringen der Suspension mit anschließendem Trocknen sowie ein eventuelles Erwärmen über die Glasübergangstemperatur kann kontinuierlich oder quasi kontinuierlich äquivalent zur Herstellung des Separators selbst erfolgen, in dem der Separator wiederum von einer Rolle abgewickelt, durch eine Beschichtungs-, Trocknungs- und gegebenenfalls Erwärmungsapparatur geführt und anschließend wieder aufgerollt werden.

Die erfindungsgemäßen Membrane bzw. die erfindungsgemäß hergestellten Membrane können als elektrischer Separator eingesetzt werden, wobei die als Separator verwendeten Membrane keine elektrisch leitenden Verbindungen aufweisen dürfen. Die erfindungsgemäßen Membrane können insbesondere als Separator in Batterien, insbesondere als Separator in Lithiumbatterien, vorzugsweise Lithium-Hochleistungs- und Hochenergiebatterien eingesetzt werden. Solche Lithium-Batterien können als Elektrolyte Lithiumsalze mit großen Anionen in Carbonaten als Lösemittel enthalten. Geeignete Lithiumsalze sind z.B. LiClO₄, LiBF₄, LiAsF₆ oder LiPF₆, wobei LiPF₆ besonders bevorzugt ist. Als Lösemittel geeignete organische Carbonate sind z.B. Ethylencarbonat, Propylencarbonat, Dimethylcarbonat, Ethylmethylcarbonat oder Diethylcarbonat oder Mischungen davon.

Gegenstand der Erfindung sind außerdem Batterien, insbesondere Lithium-Batterien oder dazu verwandte, nichtwässrige Batteriesysteme, die eine erfindungsgemäße oder erfindungsgemäß hergestellten Membran aufweisen. Durch die gute Biegbarkeit der erfindungsgemäßen Membran können solche Batterien, insbesondere Lithiumbatterien, auch Wickelzellen mit einem Wickelradius der kleinsten Wicklung von kleiner 0,5 mm sein. Durch die erfindungsgemäße Membran ist es nun auch in sehr eng gewickelten Zellen, wie z.B. gecrashten Batterien, möglich, keramische bzw. halbkeramische Membrane als Separatoren einzusetzen, und so die mit diesen Separatoren verbundenen Vorteile nutzen zu können. Unter gecrashten Batterien werden üblicherweise Gewickelte Batterien (Wickelzellen) verstanden, die nach der Fertigung durch Einwirkung großer äußerer Kräfte in eine bestimmte, meist Ovale oder zumindest nicht runde Form gebracht werden.

Ebenfalls Gegenstand der vorliegenden Erfindung sind Fahrzeuge, die eine Batterie, die den erfindungsgemäßen Separator enthält, aufweisen.

Die vorliegende Erfindung wird durch die nachfolgenden Beispiele beschrieben, ohne dass der Schutzbereich, der sich aus den Ansprüchen und der Beschreibung ergibt, durch die Beispiele eingeschränkt sein soll.

### Beispiele

### Vergleichsbeispiel 1: Herstellung einer Keramikmembran nach dem Stand der Technik

Zu 130 g Wasser und 15 g Ethanol wurden zunächst 30 g einer 5 Gew.-%igen, wässrigen HNO₃-Lösung, 10 g Tetraethoxysilan, 10 g Dynasilan AMEO und 10 g Dynasilan GLYMO (alle Silane: Degussa AG) gegeben. In diesem Sol, das zunächst für einige Stunden gerührt wurde, wurden dann jeweils 125 g der Aluminiumoxide Martoxid MZS-1 und Martoxid MZS-3 (beide Oxide von Martinswerk) suspendiert. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein 56 cm breites Polyamid-Vlies (PA-Vlies, Freudenberg) mit einer Dicke von ca. 100 µm und einem Flächengewicht von etwa 30 g/m² wurde dann in einem kontinuierlichen Aufwalzverfahren, bei welchem auf das mit einer Bandgeschwindigkeit von ca. 30 m/h bewegte Vlies mittels einer Rakel der Schlicker aufgebracht wird und durch Durchlaufen eines Ofens mit einer Länge von 1 m und einer Temperatur von 150 °C mit obigem Schlicker beschichtet.

Man erhielt am Ende eine Membran mit einer mittleren Porenweite von 450 nm, die eine sehr gute Haftung der Keramik auf dem Vlies aufwies. Nach 24 h Einlagerung in Wasser (bei Raumtemperatur) konnte kaum Ablösung der Keramik festgestellt werden. Auch bei erhöhten Temperaturen ließ sich kaum eine verstärkte Ablösung feststellen.

Anschließend wurde die Haftfestigkeit nach DIN 58 196-6, Abschnitt 3 - 6, mittels Gewebeklebestreifen Tesa 6051 ermittelt. Mit dem Gewebeklebestreifen ließ sich eine kleine Menge Keramik von dem Substrat abziehen.

### Beispiel 1: Herstellung einer erfindungsgemäßen Keramikmembran

Zu 130 g Wasser und 15 g Ethanol wurden zunächst 30 g einer 5 Gew.-%igen, wässrigen HNO₃-Lösung 10 g Tetraethoxysilan, 10 g Dynasylan AMEO und 10 g Dynasylan GLYMO (alle Silane: Degussa AG) gegeben. In diesem Sol, das zunächst für einige Stunden gerührt wurde, wurden dann jeweils 125 g der Aluminiumoxide Martoxid MZS-1 und MZS-3 (beide Oxide Martinswerk) suspendiert. Dieser Schlicker wurde für mindestens 24 h mit einem Magnetrührer homogenisiert, wobei das Rührgefäß abgedeckt werden musste, damit es nicht zu einem Lösungsmittelverlust kam.

Zur Beschichtung wurde ein 55 cm breites Polyamid-Vlies (PA-Vlies, Fa. Freudenberg KG) mit einer Dicke von ca. 100 µm und einem Flächengewicht von etwa 30 g/m² verwendet. Vor der Beschichtung wurde das Polyamid-Vlies kontinuierlich an Plasmadüsen in einem Abstand zum Polyamid-Vlies von etwa 50 mm vorbeigezogen. Für die Plasmabehandlung wurde eine Anlage bestehend aus Plasmadüsen und Generator von der Firma Plasmatreat GmbH, Bisamweg 10, D-33803 Steinhagen, verwendet. Als Arbeitsgas wurde Sauerstoff verwendet.

In einem kontinuierlichen Aufwalzverfahren (Bandgeschwindigkeit etwa 30 m/h, T = 150 °C) wurde anschließend mit obigem Schlicker, wie im Vergleichsversuch beschrieben, beschichtet.

Man erhielt am Ende eine Membran mit einer mittleren Porenweite von 450 nm, die eine sehr gute Haftung der Keramik auf dem Vlies aufwies. Nach 24 h Einlagerung in Wasser (bei Raumtemperatur) konnte keine Ablösung der Keramik festgestellt werden. Auch bei erhöhten Temperaturen ließ sich keine Ablösung feststellen.

Anschließend wurde die Haftfestigkeit nach DIN 58 196-6, Abschnitt 3 - 6, mittels Gewebeklebestreifen Tesa 6051 ermittelt. Mit dem Gewebeklebestreifen ließ sich keine nennenswerte Menge Keramik von dem Substrat abziehen.

## Patentansprüche

1. Membran auf Basis eines Polymervlieses, wobei das Vlies auf und in dem Vlies eine keramische Beschichtung aufweist, die zumindest ein Oxid, ausgewählt aus Al₂O₃, TiO₂, ZrO₂, BaTiO₃ und/oder SiO₂ aufweist,
**dadurch gekennzeichnet,**
**dass** das Polymervlies einer Plasmabehandlung unterzogen ist, und
in dieser einen Beschichtung zumindest zwei Fraktionen von Oxiden ausgewählt aus Al₂O₃, ZrO₂, TiO₂, BaTiO₃ und/oder SiO₂ vorhanden sind, wobei die erste keramische Fraktion aus einem Sol erhalten wurde und
die zweite Fraktion Partikel mit einer mittleren Partikelgröße von 200 nm bis 5 µm aufweist,
und die erste Fraktion als Schicht auf den Partikeln der zweiten Fraktion vorhanden ist und die erste Fraktion mit einem Anteil an der Beschichtung von 0,1 bis 50 Massenteilen,
die zweite Fraktion mit einem Anteil an der Beschichtung von 5 bis 99 Massenteilen in der keramischen Beschichtung vorhanden ist und außerdem
ein Silizium oder Zirkonium aufweisendes Netzwerk vorhanden ist, wobei
das Silizium des Netzwerks über Sauerstoffatome an die Oxide der keramischen Beschichtung, über organische Reste an die Oberfläche des Polymervlieses und über zumindest eine, Kohlenstoffatome aufweisende Kette an ein weiteres Silizium gebunden ist,
und diese Beschichtung Pinhole-frei ist,
und bei der Ermittlung der Haftfestigkeit nach DIN 58 196-6, Abschnitt 3 - 6, mittels Gewebeklebestreifen Tesa 6051 keine nennenswerte Menge der keramischen Beschichtung abziehbar ist.

2. Membran nach Anspruch 1,
**dadurch gekennzeichnet,**
**dass** sie durch ein Verfahren gemäß zumindest einem der Ansprüche 14 bis 26 erhalten wird.

3. Membran gemäß Anspruch 1 oder 2,
**dadurch gekennzeichnet,**
**dass** die erste keramische Fraktion Partikel mit einer mittleren Partikelgröße von kleiner 20 nm aufweist und über ein partikuläres Sol hergestellt wurde.

4. Membran gemäß Anspruch 1 oder 2,
**dadurch gekennzeichnet,**
**dass** die erste keramische Fraktion Partikel oder ein anorganisches Netzwerk des keramischen Materials enthält, die über ein polymeres Sol hergestellt wurden.

5. Membran gemäß zumindest einem der Anspruch 1 bis 4,
**dadurch gekennzeichnet,**
**dass** die erste keramische Fraktion auf den Partikel der zweiten Fraktion eine Schichtdicke kleiner 100 nm aufweist.

6. Membran nach zumindest einem der Anspruch 1 bis 5,
**dadurch gekennzeichnet,**
**dass** die zweite Partikelfraktion Partikel enthält, die eine BET-Oberfläche von kleiner 5 m²/g aufweisen.

7. Membran nach zumindest einem der Ansprüche 1 bis 6,
**dadurch gekennzeichnet,**
**dass** das Polymervlies Polymerfasern, die ausgewählt sind aus Fasern von Polyethylen, Polyacrylnitril, Polypropylen, Polyamid und/oder Polyester, aufweist.

8. Membran gemäß zumindest einem der Anspruch 1 bis 7,
**dadurch gekennzeichnet,**
**dass** in der Beschichtung zumindest zwei Fraktionen von Oxiden ausgewählt aus Al₂O₃, ZrO₂, TiO₂, BaTiO₃ und/oder SiO₂ vorhanden sind, wobei die erste Fraktion mit einem Anteil an der Beschichtung von 10 bis 80 Massenteilen und die zweite Fraktion mit einem Anteil an der Beschichtung von 20 bis 90 Massenteilen in der keramischen Beschichtung vorhanden ist, und diese Beschichtung Pinhole-frei ist.

9. Membran gemäß Anspruch 8 ,
**dadurch gekennzeichnet,**
**dass** eine Partikelfraktion Partikel enthält, die eine mittlere Partikelgröße von 0,2 bis 5 µm aufweisen.

10. Membran gemäß zumindest einem der Ansprüche 8 bis 9,
**dadurch gekennzeichnet**,
wobei die erste Fraktion Partikel mit einer mittleren Primärpartikelgröße von 30 nm bis 60 nm aufweist und die erste Fraktion mit einem Anteil an der Beschichtung von 10 bis 80 Massenteilen und die zweite Fraktion mit einem Anteil an der Beschichtung von 20 bis 90 Massenteilen in der keramischen Beschichtung vorhanden ist.

11. Membran gemäß zumindest einem der Ansprüche 8 bis 10,
**dadurch gekennzeichnet,**
**dass** die Partikel der zweiten Fraktion Aluminiumoxidpartikel sind und die erste keramische Fraktion aus Siliziumoxid gebildet wird.

12. Membran gemäß zumindest einem der Ansprüche 1 bis 11,
**dadurch gekennzeichnet,**
**dass** sie bis herab zu einem Radius von 5 mm, gebogen werden kann, ohne dass dadurch Fehler entstehen.

13. Verfahren zur Herstellung einer Membran, bei dem ein Polymervlies in und auf dem Vlies mit einer keramischen Beschichtung versehen wird, wofür
auf und in das Polymervlies eine Suspension aufgebracht wird und diese durch zumindest einmaliges Erwärmen auf und im Vlies verfestigt wird, wobei die Suspension ein Sol und zumindest eine Fraktion von Oxidpartikeln ausgewählt aus den Oxiden der Elemente Al, Zr, Ti, Ba und/oder Si aufweist,
**dadurch gekennzeichnet,**
**dass** das Polymervlies vor dem Aufbringen der Suspension einer Plasmabehandlung unterzogen wird, und
der Suspension vor dem Aufbringen
ein Gemisch aus zumindest zwei unterschiedlichen Haftvermittlern,
die jeweils auf einem Alkylalkoxysilan der allgemeinen Formel I
Rₓ-Si(OR)₄₋ₓ (I)
mit x = 1 oder 2 und R = organischer Rest, wobei
die Reste R gleich oder unterschiedlich sein können,
basieren, wobei
die Haftvermittler so gewählt werden, dass beide Haftvermittler Alkylreste aufweisen, die zumindest jeweils eine reaktive Gruppe als Substituenten aufweist,
wobei die reaktive Gruppe am Alkylrest des einen Haftvermittlers mit der reaktiven Gruppe des anderen Haftvermittlers oder
der einer Plasmabehandlung unterzogenen Polymeroberfläche während des zumindest einmaligen Erwärmens
unter Ausbildung einer kovalenten Bindung reagiert, oder
ein oder mehrere Haftvermittler gemäß der Formel I, die reaktive Gruppen aufweisen, die unter Einwirkung von UV-Strahlung unter Ausbildung einer kovalenten Bindung reagieren,
zugegeben wird, wobei bei Zugabe eines Haftvermittlers
der unter Einwirkung von UV-Strahlung reagiert,
nach dem Aufbringen der Suspension auf das Polymervlies zumindest eine Behandlung mit UV-Strahlung erfolgt.

14. Verfahren nach Anspruch 13,
**dadurch gekennzeichnet, dass**
als Arbeitsgas für die Plasmabehandlung Stickstoff, Sauerstoff, Luft, Argon, Helium, Kohlenstoffdioxid, Kohlenstoffmonoxid, Ozon, Silane, Alkane, Fluoroalkane, Fluoralkene, besonders bevorzugt Stickstoff, Sauerstoff, Luft, Argon, oder ein Gemisch dieser Arbeitsgase eingesetzt wird.

15. Verfahren nach zumindest einem der Ansprüche 13 oder 14,
**dadurch gekennzeichnet, dass**
für die Plasmabehandlung ein Radiofrequenzplasma, Zyklotronresonanzfrequenzplasma oder Mikrowellenplasma eingesetzt wird.

16. Verfahren nach zumindest einem der Ansprüche 13 - 15,
**dadurch gekennzeichnet, dass**
für die Plasmabehandlung eine Plasmaleistung von 10 bis 1000 W eingesetzt wird.

17. Verfahren nach zumindest einem der Ansprüche 13 - 16,
**dadurch gekennzeichnet, dass**
für die Plasmabehandlung ein Abstand zwischen Düse und Polymervlies von 0,1 bis 300 mm eingesetzt wird.

18. Verfahren nach zumindest einem der Ansprüche 13 - 17,
**dadurch gekennzeichnet, dass**
die Plasmabehandlung bei einer Substratgeschwindigkeit von 60 - 0,002 m/min erfolgt.

19. Verfahren nach zumindest einem der Ansprüche 13 - 18,
**dadurch gekennzeichnet,**
**dass** ein Polymervlies eingesetzt wird, das Fasern ausgewählt aus Polyester, Polyethylen, Polypropylen und/oder Polyamid, aufweist.

20. Verfahren nach zumindest einem der Ansprüche 13 - 19,
**dadurch gekennzeichnet,**
**dass** die Suspension zumindest ein Sol einer Verbindung der Elemente Al, Si, Ti, Ba oder Zr aufweist und durch Suspendieren der Fraktion von Oxidpartikeln in zumindest einem dieser Sole hergestellt wird.

21. Verfahren nach zumindest einem der Ansprüche 13 - 20,
**dadurch gekennzeichnet,**
**dass** die Suspension ein polymeres Sol einer Verbindung des Siliziums aufweist.

22. Verfahren nach zumindest einem der Ansprüche 13 - 21,
**dadurch gekennzeichnet,**
**dass** die Sole durch Hydrolysieren einer Vorläuferverbindung der Elemente Al, Zr, Ti, Ba oder Si mit Wasser oder einer Säure oder eine Kombination dieser Verbindungen erhalten werden.

23. Verfahren nach zumindest einem der Ansprüche 13 - 22,
**dadurch gekennzeichnet,**
**dass** der Massenanteil der suspendierten Partikelfraktionen dem 1,5 bis 150-fachen der eingesetzten ersten Fraktion aus dem Sol entspricht.

24. Verfahren nach zumindest einem der Ansprüche 13 - 23,
**dadurch gekennzeichnet,**
**dass** als bei Erwärmung eine kovalente Bindung ausbildende Haftvermittler 3-Aminopropyltriethoxysilan (AMEO) und 3-Glycidyloxytrimethoxysilan (GLYMO) eingesetzt werden.

25. Verfahren nach zumindest einem der Ansprüche 13 - 24,
**dadurch gekennzeichnet,**
**dass** als unter Einwirkung von UV-Strahlung eine kovalente Bindung ausbildender Haftvermittler Methacryloxypropyltrimethoxysilan (MEMO) eingesetzt wird.

26. Verfahren nach Anspruch 25,
**dadurch gekennzeichnet,**
**dass** die Behandlung mit UV-Strahlung vor oder nach dem zumindest einmaligen Erwärmen erfolgt.

27. Verfahren nach zumindest einem der Ansprüche 13 - 26,
**dadurch gekennzeichnet,**
**dass** die auf und im Polymervlies vorhandene Suspension durch Erwärmen auf 50 bis 350 °C verfestigt wird.

28. Verfahren nach Anspruch 27,
**dadurch gekennzeichnet,**
**dass** das Erwärmen der Suspension auf einem Polymervlies mit Fasern aus Polyester für 0,5 bis 10 Minuten bei einer Temperatur von 200 bis 220 °C erfolgt.

29. Verfahren nach Anspruch 27,
**dadurch gekennzeichnet,**
**dass** das Erwärmen der Suspension auf einem Polymervlies mit Fasern aus Polyamid für 0,5 bis 10 Minuten bei einer Temperatur von 130 bis 180 °C erfolgt.

30. Verfahren nach einem der Ansprüche 13 - 29,
**dadurch gekennzeichnet,**
**dass** eine Suspension eingesetzt wird, die zumindest ein Sol und zumindest zwei Fraktionen von Oxidpartikeln ausgewählt aus den Oxiden der Elemente Al, Zr, Ti, Ba und/oder Si aufweist und zumindest eine Fraktion eine mittlere Primärpartikelgröße von 10 nm bis 199 nm und einem Anteil an der Suspension von 5 bis 50 Massenteilen und zumindest eine Fraktion Primärpartikel mit einer mittleren Partikelgröße von 200 nm bis 5 µm und einem Anteil an der Suspension von 30 bis 94 Massenteilen aufweist.

31. Verwendung einer Membran gemäß zumindest einem der Ansprüche 1 bis 12 als Filtrationsmembran oder als elektrischer Separator, wobei die als Separator verwendeten Membranen keine Titanverbindungen aufweisen.

32. Lithiumbatterie, eine Membran gemäß zumindest einem der Ansprüche 1 bis 12 als Separator aufweisend.

33. Fahrzeug, eine Lithiumbatterie gemäß Anspruch 32 aufweisend.

34. Filtrationsapparatur, eine Membran gemäß zumindest einem der Ansprüche 1 bis 12 aufweisend.

## Claims

1. Membrane based on a polymeric nonwoven, the nonwoven comprising on and in the nonwoven a ceramic coating comprising at least one oxide selected from Al₂O₃, TiO₂, ZrO₂, BaTiO₃ and/or SiO₂, **characterized in that**
the polymeric nonwoven is subjected to a plasma treatment, and
this one coating comprises at least two fractions of oxides
selected from Al₂O₃, ZrO₂, TiO₂, BaTiO₃ and/or SiO₂, the first ceramic fraction having been obtained from a sol and
the second fraction comprising particles having an average particle size in the range from 200 nm to 5 µm,
and the first fraction being present as a layer on the particles of the second fraction
and the first fraction comprising from 0.1 to 50 parts by mass of the coating,
the second fraction comprising from 5 to 99 parts by mass of the ceramic coating and also
a network comprising silicon or zirconium,
the silicon in the network being bonded by oxygen atoms to the oxides of the ceramic coating, via organic radicals to the surface of the polymeric nonwoven and via at least one carbon chain to a further silicon,
and this coating is pinhole free,
and, on determining adhesive strength within the meaning of DIN 58 196-6 Section 3-6 using Tesa 6051 adhesive fabric strip, no significant amount of the ceramic coating is detachable.

2. Membrane according to Claim 1,
**characterized in that**
it is obtained by a process as per at least one of claims 14 to 26.

3. Membrane as per Claim 1 or 2,
**characterized in that**
the first ceramic fraction comprises particles having an average particle size of less than 20 nm and has been produced via a particulate sol.

4. Membrane as per Claim 1 or 2,
**characterized in that**
the first ceramic fraction contains particles or an inorganic network of the ceramic material which were produced via a polymeric sol.

5. Membrane as per at least one of Claims 1 to 4,
**characterized in that**
the first ceramic fraction has a layer thickness of less than 100 nm on the particles of the second fraction.

6. Membrane according to at least one of Claims 1 to 5,
**characterized in that**
the second particle fraction contains particles having a BET surface area of less than 5 m²/g.

7. Membrane according to at least one of Claims 1 to 6,
**characterized in that**
the polymeric nonwoven comprises polymeric fibres selected from fibres of polyethylene, polyacrylonitrile, polypropylene, polyamide and/or polyester.

8. Membrane as per at least one of Claims 1 to 7,
**characterized in that**
the coating comprises at least two fractions of oxides selected from Al₂O₃, ZrO₂, TiO₂, BaTiO₃ and/or SiO₂, the first fraction comprising from 10 to 80 parts by mass of the coating and the second fraction comprising from 20 to 90 parts by mass of the ceramic coating, and this coating is pinhole free.

9. Membrane as per Claim 8,
**characterized in that**
one particle fraction contains particles having an average particle size in the range from 0.2 to 5 µm.

10. Membrane as per at least one of Claims 8 to 9,
**characterized in that**
the first fraction comprises particles having an average primary particle size in the range from 30 nm to 60 nm and the first fraction comprises from 10 to 80 parts by mass of the coating and the second fraction comprises from 20 to 90 parts by mass of the ceramic coating.

11. Membrane as per at least one of Claims 8 to 10,
**characterized in that**
the particles of the second fraction are aluminium oxide particles and the first ceramic fraction is formed from silicon oxide.

12. Membrane as per at least one of Claims 1 to 11,
**characterized in that**
it is bendable down to a radius of 5 mm without defects arising as a result.

13. Process for producing a membrane comprising providing a polymeric nonwoven with a ceramic coating in and on the nonwoven by
a suspension being applied onto and into the polymeric nonwoven and being solidified on and in the nonwoven by heating one or more times, the
suspension comprising a sol and at least one fraction of oxidic particles selected from the oxides of the elements Al, Zr, Ti, Ba and/or Si,
**characterized in that**
the polymeric nonwoven is subjected to a plasma treatment prior to application of the suspension, and
the suspension has added to it prior to application
a mixture of at least two different adhesion promoters
which are each based on an alkylalkoxysilane of the general formula I
Rₓ- Si (OR)₄₋ₓ (I)
where x = 1 or 2 and R = organic radical,
the R radicals being the same or different,
the adhesion promoters being selected so that both the adhesion promoters comprise alkyl radicals which at least each comprise a reactive group as a substituent,
the reactive group on the alkyl radical of one adhesion promoter reacting with the reactive group of the other adhesion promoter or of the plasmatreated polymeric surface during the one or more heating steps to form a covalent bond, or one or more adhesion promoters as per the formula I, which have reactive groups which are capable of reacting under the action of UV radiation to form a covalent bond,
the addition of an adhesion promoter
which reacts under the action of UV radiation being followed by one or more treatments with UV radiation after the suspension has been applied to the polymeric nonwoven.

14. Process according to Claim 13,
**characterized in that**
the working gas for the plasma treatment utilizes nitrogen, oxygen, air, argon, helium, carbon dioxide, carbon monoxide, ozone, silanes, alkanes, fluoroalkanes, fluoroalkenes, more preferably nitrogen, oxygen, air, argon or a mixture thereof.

15. Process according to at least one of Claims 13 or 14,
**characterized in that**
the plasma treatment utilizes a radio frequency plasma, cyclotron resonance frequency plasma or microwave plasma.

16. Process according to at least one of Claims 13-15,
**characterized in that**
the plasma treatment utilizes a plasma power in the range from 10 to 1000 W.

17. Process according to at least one of Claims 13-16,
**characterized in that**
the plasma treatment utilizes a gap of 0.1 to 300 mm between the nozzle and the polymer nonwoven.

18. Process according to at least one of Claims 13-17
**characterized in that**
the plasma treatment is effected at a substrate speed of 60-0.002 m/min.

19. Process according to at least one of Claims 13-18,
**characterized in that**
the fibres of the polymeric nonwoven used are selected from polyester, polyethylene, polypropylene and/or polyamide.

20. Process according to at least one of Claims 13-19,
**characterized in that**
the suspension comprises at least one sol of a compound of the elements Al, Si, Ti, Ba or Zr and is produced by suspending the fraction of oxidic particles in at least one of these sols.

21. Process according to at least one of Claims 13-20,
**characterized in that**
the suspension comprises a polymeric sol of a compound of silicon.

22. Process according to at least one of Claims 13-21,
**characterized in that**
the sols are obtained by hydrolysing a precursor compound of the elements Al, Zr, Ti, Ba or Si with water or an acid or a combination thereof.

23. Process according to at least one of Claims 13-22,
**characterized in that**
the suspended particle fractions comprise from 1.5 to 150 times by mass of the utilized first fraction from the sol.

24. Process according to at least one of Claims 13-23,
**characterized in that**
3-aminopropyltriethoxysilane (AMEO) and 3-glycidyloxytrimethoxysilane (GLYMO) are used as adhesion promoters capable of forming a covalent bond on heating.

25. Process according to at least one of Claims 13-24,
**characterized in that**
methacryloyloxypropyltrimethoxysilane (MEMO) is used as an adhesion promoter capable of forming a covalent bond under the action of UV radiation.

26. Process according to Claim 25,
**characterized in that**
a treatment with UV radiation is effected before or after the one or more heating steps.

27. Process according to at least one of Claims 13-26,
**characterized in that**
the suspension present on and in the polymeric nonwoven is solidified by heating to a temperature in the range from 50 to 350°C.

28. Process according to Claim 27,
**characterized in that**
on a polymeric nonwoven comprising polyester fibres the suspension is heated at a temperature in the range from 200 to 220°C for from 0.5 to 10 minutes.

29. Process according to Claim 27,
**characterized in that**
on a polymeric nonwoven comprising polyamide fibres the suspension is heated at a temperature in the range from 130 to 180°C for from 0.5 to 10 minutes.

30. Process according to any one of Claims 13-29,
**characterized in that**
a suspension utilized comprises at least one sol and at least two fractions of oxidic particles selected from the oxides of the elements Al, Zr, Ti, Ba and/or Si and at least one fraction having an average primary particle size in the range from 10 nm to 199 nm and comprises from 5 to 50 parts by mass of the suspension and at least one fraction comprises primary particles having an average particle size in the range from 200 nm to 5 µm and comprises from 30 to 94 parts by mass of the suspension.

31. Use of a membrane as per at least one of Claims 1 to 12 as a filtering membrane or as an electrical separator, although when used as a separator the membranes are free of any titanium compounds.

32. Lithium battery comprising a membrane as per at least one of Claims 1 to 12 as a separator.

33. Vehicle comprising a lithium battery as per Claim 32.

34. Filtration apparatus comprising a membrane as per at least one of Claims 1 to 12.

## Revendications

1. Membrane à base d'un non-tissé polymère, le non-tissé comprenant sur et dans le non-tissé un revêtement céramique qui comprend au moins un oxyde choisi parmi Al₂O₃, TiO₂, ZrO₂, BaTiO₃ et/ou SiO₂,
**caractérisée en ce que**
le non-tissé polymère est soumis à un traitement plasma, et
au moins deux fractions d'oxydes choisis parmi Al₂O₃, ZrO₂, TiO₂, BaTiO₃ et/ou SiO₂ sont présentes dans ce revêtement, la première fraction céramique ayant été obtenue à partir d'un sol et
la seconde fraction comprenant des particules d'une taille de particule moyenne allant de 200 nm à 5 µm,
et la première fraction étant présente sous la forme d'une couche sur les particules de la seconde fraction,
et la première fraction étant présente dans le revêtement céramique en une proportion du revêtement de 0,1 à 50 parties en masse,
la seconde fraction en une proportion du revêtement de 5 à 99 parties en masse, et
un réseau comprenant du silicium ou du zirconium est également présent,
le silicium du réseau étant relié par des atomes d'oxygène aux oxydes du revêtement céramique, par des radicaux organiques à la surface du non-tissé polymère, et par au moins une chaîne comprenant des atomes de carbone à un autre silicium,
et ce revêtement est exempt de trous d'épingle, et, lors de la détermination de l'adhérence selon DIN 58 196-6, section 3-6, au moyen de bandes de toile adhésive Tesa 6051, aucune quantité considérable du revêtement céramique ne peut être ôtée.

2. Membrane selon la revendication 1, **caractérisée en ce qu'**elle est obtenue par un procédé selon au moins l'une quelconque des revendications 14 à 26.

3. Membrane selon la revendication 1 ou 2, **caractérisée en ce que** la première fraction céramique comprend des particules d'une taille de particule moyenne inférieure à 20 nm et a été fabriquée en utilisant un sol particulaire.

4. Membrane selon la revendication 1 ou 2, **caractérisée en ce que** la première fraction céramique contient des particules ou un réseau inorganique du matériau céramique, qui ont été fabriqués en utilisant un sol polymère.

5. Membrane selon au moins l'une quelconque des revendications 1 à 4, **caractérisée en ce que** la première fraction céramique sur les particules de la seconde fraction présente une épaisseur de couche inférieure à 100 nm.

6. Membrane selon au moins l'une quelconque des revendications 1 à 5, **caractérisée en ce que** la seconde fraction de particules contient des particules qui présentent une surface BET inférieure à 5 m²/g.

7. Membrane selon au moins l'une quelconque des revendications 1 à 6, **caractérisée en ce que** le non-tissé polymère comprend des fibres polymères qui sont choisies parmi les fibres de polyéthylène, polyacrylonitrile, polypropylène, polyamide et/ou polyester.

8. Membrane selon au moins l'une quelconque des revendications 1 à 7, **caractérisée en ce qu'**au moins deux fractions d'oxydes choisis parmi Al₂O₃, ZrO₂, TiO₂, BaTiO₃ et/ou SiO₂ sont présentes dans le revêtement, la première fraction étant présente dans le revêtement céramique en une proportion du revêtement de 10 à 80 parties en masse et la seconde fraction en une proportion du revêtement de 20 à 90 parties en masse, et ce revêtement est exempt de trous d'épingle.

9. Membrane selon la revendication 8, **caractérisée en ce qu'**une fraction de particules contient des particules qui présentent une taille de particule moyenne de 0,2 à 5 µm.

10. Membrane selon au moins l'une quelconque des revendications 8 à 9, **caractérisée en ce que** la première fraction comprend des particules d'une taille de particule primaire moyenne de 30 nm à 60 nm et la première fraction est présente dans le revêtement céramique en une proportion du revêtement de 10 à 80 parties en masse et la seconde fraction en une proportion du revêtement de 20 à 90 parties en masse.

11. Membrane selon au moins l'une quelconque des revendications 8 à 10, **caractérisée en ce que** les particules de la seconde fraction sont des particules d'oxyde d'aluminium et la première fraction céramique est formée d'oxyde de silicium.

12. Membrane selon au moins l'une quelconque des revendications 1 à 11, **caractérisée en ce qu'**elle peut être courbée jusqu'à un rayon de 5 mm, sans que des défauts ne se forment.

13. Procédé de fabrication d'une membrane, selon lequel un non-tissé polymère est muni dans et sur le non-tissé d'un revêtement céramique, selon lequel une suspension est appliquée sur et dans le non-tissé polymère et celle-ci est solidifiée sur et dans le non-tissé par chauffage à au moins une reprise, la suspension comprenant un sol et au moins une fraction de particules d'oxydes choisis parmi les oxydes des éléments Al, Zr, Ti, Ba et/ou Si,
**caractérisé en ce que**
le non-tissé polymère est soumis à un traitement plasma avant l'application de la suspension, et
un mélange d'au moins deux promoteurs d'adhésion différents, qui sont chacun à base d'un alkylalcoxysilane de formule générale I
Rₓ-Si(OR)₄₋ₓ (I)
avec x = 1 ou 2 et R = radical organique, les radicaux R pouvant être identiques ou différents,
les promoteurs d'adhésion étant choisis de manière à ce que les deux promoteurs d'adhésion comprennent des radicaux alkyle qui comprennent chacun au moins un groupe réactif en tant que substituant,
le groupe réactif sur le radical alkyle d'un promoteur d'adhésion réagissant avec le groupe réactif de l'autre promoteur d'adhésion ou la surface polymère soumise à un traitement plasma pendant le chauffage à au moins une reprise, en formant une liaison covalente, ou
un ou plusieurs promoteurs d'adhésion de formule I, qui comprennent des groupes réactifs, qui réagissent sous l'effet d'un rayonnement UV en formant une liaison covalente,
est ajouté à la suspension avant l'application, au moins un traitement avec un rayonnement UV ayant lieu après l'application de la suspension sur le non-tissé polymère lors de l'ajout d'un promoteur d'adhésion qui réagit sous l'effet d'un rayonnement UV.

14. Procédé selon la revendication 13, **caractérisé en ce que** de l'azote, de l'oxygène, de l'air, de l'argon, de l'hélium, du dioxyde de carbone, du monoxyde de carbone, de l'ozone, des silanes, des alcanes, des fluoroalcanes, des fluoroalcènes, de manière particulièrement préférée de l'azote, de l'oxygène, de l'air, de l'argon, ou un mélange de ces gaz de travail est utilisé en tant que gaz de travail pour le traitement plasma.

15. Procédé selon au moins l'une quelconque des revendications 13 ou 14, **caractérisé en ce qu'**un plasma radiofréquence, un plasma à la fréquence de résonance du cyclotron ou un plasma micro-onde est utilisé pour le traitement plasma.

16. Procédé selon au moins l'une quelconque des revendications 13 à 15, **caractérisé en ce qu'**une puissance plasma de 10 à 1 000 W est utilisée pour le traitement plasma.

17. Procédé selon au moins l'une quelconque des revendications 13 à 16, **caractérisé en ce qu'**une distance entre la buse et le non-tissé polymère de 0,1 à 300 mm est utilisée pour le traitement plasma.

18. Procédé selon au moins l'une quelconque des revendications 13 à 17, **caractérisé en ce que** le traitement plasma a lieu à une vitesse du substrat de 60 à 0,002 m/min.

19. Procédé selon au moins l'une quelconque des revendications 13 à 18, **caractérisé en ce qu'**un non-tissé polymère qui comprend des fibres choisies parmi le polyester, le polyéthylène, le polypropylène et/ou le polyamide est utilisé.

20. Procédé selon au moins l'une quelconque des revendications 13 à 19, **caractérisé en ce que** la suspension comprend au moins un sol d'un composé des éléments Al, Si, Ti, Ba ou Zr et est fabriquée par suspension de la fraction de particules d'oxydes dans au moins un de ces sols.

21. Procédé selon au moins l'une quelconque des revendications 13 à 20, **caractérisé en ce que** la suspension comprend un sol polymère d'un composé de silicium.

22. Procédé selon au moins l'une quelconque des revendications 13 à 21, **caractérisé en ce que** les sols sont obtenus par hydrolyse d'un composé précurseur des éléments Al, Zr, Ti, Ba ou Si avec de l'eau ou un acide ou une combinaison de ces composés.

23. Procédé selon au moins l'une quelconque des revendications 13 à 22, **caractérisé en ce que** la proportion en masse des fractions de particules suspendues correspond à 1,5 à 150 fois la première fraction utilisée du sol.

24. Procédé selon au moins l'une quelconque des revendications 13 à 23, **caractérisé en ce que** le 3-aminopropyltriéthoxysilane (AMEO) et le 3-glycidyloxytriméthoxysilane (GLYMO) sont utilisés en tant que promoteurs d'adhésion formant une liaison covalente lors du chauffage.

25. Procédé selon au moins l'une quelconque des revendications 13 à 24, **caractérisé en ce que** le méthacryloxypropyltriméthoxysilane (MEMO) est utilisé en tant que promoteur d'adhésion formant une liaison covalente sous l'effet d'un rayonnement UV.

26. Procédé selon la revendication 25, **caractérisé en ce que** le traitement avec un rayonnement UV a lieu avant ou après le chauffage à au moins une reprise.

27. Procédé selon au moins l'une quelconque des revendications 13 à 26, **caractérisé en ce que** la suspension présente sur et dans le non-tissé polymère est solidifiée par chauffage à une température de 50 à 350 °C.

28. Procédé selon la revendication 27, **caractérisé en ce que** le chauffage de la suspension sur un non-tissé polymère comprenant des fibres de polyester a lieu pendant 0,5 à 10 minutes à une température de 200 à 220 °C.

29. Procédé selon la revendication 27, **caractérisé en ce que** le chauffage de la suspension sur un non-tissé polymère comprenant des fibres de polyamide a lieu pendant 0,5 à 10 minutes à une température de 130 à 180 °C.

30. Procédé selon l'une quelconque des revendications 13 à 29, **caractérisé en ce qu'**on utilise une suspension qui comprend au moins un sol et au moins deux fractions de particules d'oxydes choisis parmi les oxydes des éléments Al, Zr, Ti, Ba et/ou Si, et au moins une fraction présente une taille de particule primaire moyenne de 10 nm à 199 nm et une proportion de la suspension de 5 à 50 parties en masse et au moins une fraction comprend des particules primaires présentant une taille de particule moyenne de 200 nm à 5 µm et présente une proportion de la suspension de 30 à 94 parties en masse.

31. Utilisation d'une membrane selon au moins l'une quelconque des revendications 1 à 12 en tant que membrane de filtration ou en tant que séparateur électrique, les membranes utilisées en tant que séparateur ne comprenant aucun composé de titane.

32. Batterie au lithium, comprenant une membrane selon au moins l'une quelconque des revendications 1 à 12 en tant que séparateur.

33. Automobile, comprenant une batterie au lithium selon la revendication 32.

34. Appareil de filtration, comprenant une membrane selon au moins l'une quelconque des revendications 1 à 12.
